# EUROPÄISCHE PATENTSCHRIFT

(11) **EP 4 176 289 B1**
(45) Veröffentlichungstag und Bekanntmachung des Hinweises auf die Patenterteilung: **14.05.2025**
(21) Anmeldenummer: 21736578.2
(22) Anmeldetag: 23.06.2021
(51) Int. Cl.: G01V 3/165, G05D 1/00, G01S 5/02

(54) **VERFAHREN ZUR ERMITTLUNG EINER RELATIVEN POSITION P SOWIE SYSTEM**
METHOD FOR ASCERTAINING A RELATIVE POSITION P, AND SYSTEM
PROCÉDÉ POUR DÉTERMINER UNE POSITION RELATIVE P ET SYSTÈME

(30) Priorität: 06.07.2020 DE 102020208409
(43) Veröffentlichungstag der Anmeldung: 10.05.2023
(73) Patentinhaber: Robert Bosch GmbH, 70442 Stuttgart (DE)
(72) Erfinder: VISEL, Benjamin, 75378 Bad Liebenzell-Moettlingen (DE); WINKLER, Thomas, 71272 Renningen (DE); HOFFMANN, Ulli, 75223 Niefern-Oeschelbronn (DE); KROPF, Thomas, 72124 Pliezhausen (DE); WOSTRADOWSKI, Uwe, 71263 Weil Der Stadt-Merklingen (DE); PLATZER, Joachim, 71686 Remseck-Hochberg (DE); ROELVER, Robert, 75365 Calw-Stammheim (DE); LAIBLE, Stefan, 72074 Tuebingen (DE); WOLTER, Frank, 71272 Renningen (DE); KLEINER, Alexander, 75242 Neuhausen (DE)
(86) Internationale Anmeldenummer: PCT/EP2021/067062
(87) Internationale Veröffentlichungsnummer: WO 2022/008237

(56) Entgegenhaltungen:
- EP-A1- 3 527 933
- WO-A1-2015/143500
- DE-A1- 102008 057 705
- DE-A1- 102017 214 314
- US-A1- 2011 006 772
- US-A1- 2012 313 626

## Beschreibung

Die Erfindung betrifft ein Verfahren zur Ermittlung einer relativen Position P eines ersten Gegenstands bezüglich zumindest eines Referenzgegenstands. Ferner betrifft die Erfindung ein System umfassend einen ersten Gegenstand, zumindest einen Referenzgegenstand sowie eine Auswertevorrichtung, wobei das System dazu eingerichtet ist, das erfindungsgemäße Verfahren auszuführen.

### Stand der Technik

Die präzise Positionsbestimmung von Gegenständen, insbesondere von autonom agierenden Systemen wie beispielsweise Drohnen oder Robotern, ist herausfordernd. Zu den wesentlichen Kriterien zählen dabei eine hohe Präzision in der Ermittlung des Ortes, meist in x-, y- und z-Koordinaten, und der Ausrichtung des Gegenstands. Darüber hinaus spielen Kosten, Baugröße und Leistungsverbrauch von Systemkomponenten eine wichtige Rolle in der Umsetzung von derartigen Systemen. Beispielsweise werden für Rasenmähroboter Genauigkeiten von weniger als 5 cm in einer Fläche von 20 m Radius benötigt, um künftig auf eine Installation eines Begrenzungsdrahtes als Mittel zur Positionsbestimmung, vgl. DE 102017214314 A1, verzichten zu können.

Kostengünstige satellitenbasierte Navigationssysteme ermöglichen Positioniergenauigkeiten von wenigen Metern bis unter 50 cm (im Idealfall mit Referenzsignalen bis unter 2 cm), abhängig von einer Einsatzumgebung des Systems. Dabei ist die Anwendung auf Außenbereiche begrenzt. Radar-, Video- oder Lidarbasierte Positionierungssysteme, die durch Auswertung von aus der Umgebung erfassten Informationen eine Positionsbestimmung zulassen, benötigen entweder teure Sensorsysteme und/oder hohe Anforderungen an eine Rechenleistung innerhalb des Systems.

Eine vergleichsweise einfache Alternative zu derartigen Positionierungssystemen bilden Systeme, die unter Verwendung von Magnetfeldern eine relative Position, d.h. insbesondere eine Lage und/oder eine Ausrichtung, eines Gegenstands bezüglich eines Magnetfeldsenders ermittelbar machen. Derartige Systeme sind beispielsweise bekannt aus US 4,737,794 A1.

WO 2015/143500 A1 offenbart ein Markierungselement für eine Lokalisierung in einem Medium.

Aus der US 2011 /006772 A1 ist ein bewegbares selbststehendes Lokalisierungssystem für elektromagnetische Strahlung bekannt.

In der DE 10 2008 057705 A1 ist ein System zum Erfassen und Bereitstellen von Informationen, die Fußballspielern zugeordnet sind, beschrieben.

### Offenbarung der Erfindung

Entsprechend Anspruch 1 wird ein Verfahren zur Ermittlung einer relativen Position P eines ersten Gegenstands bezüglich zumindest eines Referenzgegenstands vorgeschlagen. Das Verfahren umfasst:
- Erzeugen zumindest dreier gerichteter Magnetfelder B1, B2, B3 mit unterscheidbaren Modulationsfrequenzen f1, f2, f3 mittels einer dem Referenzgegenstand zugeordneten Magnetfelderzeugungsvorrichtung, wobei die Magnetfelderzeugungsvorrichtung zumindest drei Emitterspulen Tx1, Tx2, Tx3 umfasst, die wechselweise eine definierte Anordnung zueinander aufweisen,
- Erfassen von Magnetfeldstärken |Bx(P)|, |By(P)|, |Bz(P)| und Modulationsfrequenzen f1, f2, f3 der Magnetfelder B1, B2, B3 mittels einer Magnetfelderfassungsvorrichtung des ersten Gegenstands,
- Ermitteln der relativen Position P des ersten Gegenstands bezüglich des zumindest einen Referenzgegenstands mittels einer Auswertevorrichtung aus den erfassten, über die erfassten Modulationsfrequenzen f1, f2, f3 den gerichteten Magnetfeldern B1, B2, B3 zuordenbaren Magnetfeldstärken |Bx(P)|, |By(P)|, |Bz(P)|.

Dabei stellen die erfassten Magentfeldstärken in ausführlicher Schreibweise zu jedem Magnetfeld B1, B2, B3 ermittelte Magnetfeldkomponenten |Bx^{1,2,3}(P)|, |By^{1,2,3} (P)|, |Bz^{1,2,3} (P)| dar.

Die relative Position P des ersten Gegenstands bezüglich des zumindest einen Referenzgegenstands betrifft dessen relative Lage, beispielsweise angegeben durch drei Koordinaten x, y und z bezüglich dreier insbesondere orthogonaler Koordinatenachsen X, Y, Z, und/oder dessen relative Ausrichtung, beispielsweise angegeben durch drei Drehwinkel φ, θ, ρ, insbesondere um diese drei Achsen X, Y, Z.

Die relative Position wird dabei aus der Erfassung von Magnetfeldern B1, B2, B3, die von einer Magnetfelderzeugungsvorrichtung erzeugt und ausgesandt werden, abgeleitet. Unter einem Magnetfeld ist dabei insbesondere ein elektromagnetisches Wechselfeld zu verstehen, wobei in dieser Schrift auf den Anteil des elektrischen Wechselfelds nicht eingegangen wird. Die Magnetfelderzeugungsvorrichtung dient dabei der Erzeugung zumindest dreier gerichteter Magnetfelder B1, B2, B3, die allesamt an jedem Punkt im Raum wirken. Hierzu umfasst die Magnetfelderzeugungsvorrichtung alle zur Erzeugung und Aussendung der Magnetfelder benötigten Komponenten wie beispielsweise eine Steuervorrichtung, einen Signalgenerator, eine Energieversorgung etc.

Die Magnetfelder können sich, insbesondere bei paralleler Erzeugung, in Richtung und Magnetfeldstärke überlagern, sodass ein sich aus den zumindest drei Magnetfeldern B1, B2, B3 zusammensetzendes dreidimensionales Magnetfeld zumindest in einer Umgebung der Magnetfelderzeugungsvorrichtung erzeugt wird. Alternativ können die Magnetfelder sequentiell erzeugt werden, sodass an jedem Punkt im Raum zu einem Zeitpunkt stets nur ein Magnetfeld B1 oder B2 oder B3 wirkt. Derart ist es möglich, mit einer höheren Sendeleistung eines jeden einzeln emittierten Magnetfelds eine höhere Reichweite einer ermittelbaren Position zu erreichen, wobei gleichzeitig Grenzwerte in einer Emissionsleistung geringgehalten werden können.

Die Erzeugung der Magnetfelder B1, B2, B3 erfolgt mittels zumindest drei Emitterspulen Tx1, Tx2, Tx3, die wechselweise eine definierte Anordnung zueinander aufweisen. Als Emitterspulen sind beispielsweise RF-Spulen denkbar. Insbesondere sind die drei Emitterspulen Tx1, Tx2, Tx3 jeweils wechselseitig orthogonal ausgerichtet, sodass auch die mittels der Emitterspulen Tx1, Tx2, Tx3 erzeugten Magnetfelder B1, B2, B3 wechselseitig orthogonal ausgerichtet sind (d.h. eine wechselseitig orthogonal angeordnete Ausprägung, beispielsweise Symmetrie, oder Gestalt aufweisen). Alternativ können andere Winkel zwischen den Emitterspulen Tx1, Tx2, Tx3 gewählt werden. Durch die feste Beziehung der Magnetfelder B1, B2, B3 zueinander lassen sich die Magnetfelder B1, B2, B3 als gerichtet verstehen, d.h. es liegt kein grundsätzlich zufälliger Verlauf der Magnetfelder B1, B2, B3 vor (von einem Einfluss von Störfeldern abgesehen, s.u.). Die Magnetfelder B1, B2, B3 lassen sich mit Magnetfeldvektoren mit jeweiligen Komponenten in x-, y- und z-Richtung beschreiben, d.h. |B1^{x,y,z}|, |B2^{x,y,z}|, |B3^{x,y,z}|. In vorliegendem Verfahren wird der Magnetfeldvektor an einem gegenbenen Punkt im Raum getrennt für das Feld der Tx1-, Tx2- und Tx3-Emitterspule ausgewertet.

In einer Ausführungsform des Verfahrens zur Ermittlung einer relativen Position wird ein Sendepegel bei der Erzeugung der Magnetfelder B1, B2, B3 abhängig von einer von der Magnetfelderfassungsvorrichtung an einem Punkt im Raum erfassten Magnetfeldstärke |Bx(P)|, |By(P)|, |Bz(P)| eines jeden Magnetfelds B1, B2 und B3 gesteuert, insbesondere geregelt. Auf diese Weise ist eine situative Erfassung der Magnetfeldstärke zur Anpassung der Sendeleistung der Magnetfelder B1, B2, B3 nutzbar. Dazu kann der erste Gegenstand beispielsweise eine Kommunikationsvorrichtung zur Realisierung einer, insbesondere kabellosen, Kommunikationsverbindung mit einer Kommunikationsvorrichtung des Referenzgegenstands umfassen, wobei die Steuerung über die Kommunikationsverbindung ermöglicht wird. Ferner kann eine grobe Abstandsmessung bereits durch Auswerten eines Empfangspegels der Kommunikationsverbindung erfolgen. Ferner kann eine Anpassung der Sendeleistung auch auf Grundlage von Informationen, die mittels weiterer Sensorik situativ erfasst werden, durchgeführt werden. Beispielsweise kann mittels eines Radars und/oder mittels kamerabasierter Sensorik eine Information über eine Umgebung, insbesondere über einen Abstand, des ersten Gegenstands und des Referenzgegenstands erfasst werden, auf deren Grundlage die Sendeleistung situationsabhängig angepasst wird. Derart ist es beispielsweise möglich, einen Sendepegel möglichst niedrig, beispielsweise nur 10 dB über einem Rauschen der Magnetfelderfassungsvorrichtung, zu betreiben und auf diese Weise Energie und Störpotential zu minimieren.

Die Magnetfelderzeugungsvorrichtung ist dazu eingerichtet, die Magnetfelder B1, B2, B3 mit unterscheidbaren Modulationsfrequenzen f1, f2, f3 zu erzeugen, insbesondere mittels der Emitterspulen Tx1, Tx2, Tx3 zu emittieren. Die Modulationsfrequenzen bezeichnen dabei Frequenzen von, insbesondere niederfrequenten, Signalen, die auf die Magnetfelder B1, B2, B3 jeweils aufmoduliert werden. Insbesondere bewirkt die Modulation, dass ein jeweiliges Magnetfeld in dessen Intensität (Magnetfeldstärke) variiert, insbesondere zwischen "An" und "Aus" variiert. Dabei unterscheiden sich die Modulationsfrequenzen f1, f2, f3 jeweils. Wird das Magnetfeld B1 beispielsweise über einen Zeitraum von einer Sekunde emittiert, so kann dieses Magnetfeld Träger eines Modulationssignals f1 sein, das während der Emission des Magnetfelds B1 mit dessen Emission ausgesendet wird. Eine hinreichende Unterscheidbarkeit der Modulationsfrequenzen f1, f2, f3 ist dabei durch ein Auflösungsvermögen eines Empfängers, hier der Magnetfelderfassungsvorrichtung, bestimmt. In einem Ausführungsbeispiel des Verfahrens ist die Modulationsfrequenz f1, f2, f3 der Magnetfelder größer als 30 kHz und/oder kleiner als 150 kHz. Insbesondere erlauben derart eingeschränkte Modulationsfrequenzen, Einflüsse vom Erdmagnetfeld und/oder von Störsignalen, beispielsweise aus dem Rundfunkspektrum, zu vermeiden.

Die Magnetfelderzeugungsvorrichtung ist dem Referenzgegenstand zugeordnet, d.h. sie weist eine feste örtliche Beziehung zu diesem auf. Derart kann realisiert werden, dass eine relative Position P, die bezüglich der Magnetfelderzeugungsvorrichtung ermittelt wird, in eine relative Position bezüglich des Referenzgegenstands zumindest umrechenbar ist. In einer Ausführungsform ist die Magnetfelderzeugungsvorrichtung als ein Bestandteil des Referenzgegenstands ausgebildet und derart ortsfest mit diesem verbunden. Insbesondere kann der Referenzgegenstand auch durch die Magnetfelderzeugungsvorrichtung realisiert sein.

Die an einem Punkt im Raum wirkenden Magnetfelder B1, B2, B3 werden mittels der Magnetfelderfassungsvorrichtung erfasst. Die Magnetfelderfassungsvorrichtung ist dem ersten Gegenstand zugeordnet, insbesondere in diesen integriert oder stellt diesen ersten Gegenstand dar. Die Magnetfelderfassungsvorrichtung dient der Erfassung der zumindest drei gerichteten Magnetfelder B1, B2, B3 am Ort der Magnetfelderfassungsvorrichtung. Dabei ist die Magnetfelderfassungsvorrichtung dazu eingerichtet, die wirkenden Magnetfeldstärken |Bx(P)|, |By(P)|, |Bz(P)| - oder die wirkenden Magnetfeldstärken |Bx(P)|, |By(P)|, |Bz(P)| und zugehörige Magnetfeldrichtungen (beispielsweise mittels eines Vektormagnetometers) - sowie die Modulationsfrequenzen f1, f2, f3 der Magnetfelder B1, B2, B3 zu detektieren. Mittels der erfassten Modulationsfrequenz f1, f2 oder f3 kann eine erfasste Magnetfeldstärke eindeutig einem von der Magnetfelderzeugungsvorrichtung emittierten Magnetfeld B1, B2 bzw. B3 zugeordnet werden. Derart können die an einem Punkt im Raum wirkenden Magnetfeldstärken |Bx(P)|, |By(P)|, |Bz(P)| eines jeden Magnetfelds B1, B2 und B3 voneinander unterschieden werden und derart getrennt ausgewertet werden (auch bezeichenbar als |B1^{x,y,z}|, |B2^{x,y,z}|, |B3^{x,y,z}|). Anhand der auf diese Weise erfassbaren neun Messwerte kann die relative Position P im emittierten Magnetfeld B1, B2, B3 - d.h. relativ zur Magnetfelderzeugungsvorrichtung und damit relativ zum Referenzgegenstand - bestimmt werden (über ein überbestimmtes Gleichungssystem). Zur genauen Ableitung der Position aus den erfassten Magnetfeldstärken sei auf den eingangs zitierten Stand der Technik verwiesen.

Die Magnetfelderfassungsvorrichtung umfasst alle zur signaltechnischen Erfassung der wirkenden Magnetfeldstärken |Bx(P)|, |By(P)|, |Bz(P)| und Modulationsfrequenzen f1, f2, f3 benötigten Komponenten, beispielsweise eine Steuervorrichtung, eine elektrische Empfangsschaltung, eine Energieversorgung etc. In einer Ausführungsform des Verfahrens zur Ermittlung einer relativen Position umfasst die Magnetfelderfassungsvorrichtung zumindest einen Magnetfeldsensor, insbesondere drei Magnetfeldsensoren, aus einer Liste von Magnetfeldsensoren, wobei die Liste zumindest Quantensensoren, TMR-Sensoren, GMR-Sensoren, Empfangsspulen (beispielsweise Pickup-Spulen), Fluxgate-Sensoren und Hall-Sensoren umfasst. Ein derartiger Magnetfeldsensor ist geeignet, wirkende Magnetfeldstärken - ggf. auch wirkenden Magnetfeldstärken und zugehörige Magnetfeldrichtungen - sowie Modulationsfrequenzen von Magnetfeldern zu detektieren. Dabei umfasst die Erfassung einer Magnetfeldstärke begrifflich auch die Erfassung einer magnetischen Flussdichte, d.h. der Signalamplitude eines Magnetfeldsensors.

In einer Ausführungsform des Verfahrens zur Ermittlung einer relativen Position umfasst die Magnetfelderfassungsvorrichtung zumindest einen Magnetfeldsensor, der als ein farbzentrenbasierter Magnetfeldsensor, insbesondere als ein Quantensensor basierend auf Farbzentren (Stickstoff-Fehlstellen) in Diamant, realisiert ist. Insbesondere farbzentrenbasierte Magnetfeldsensoren, wie sie prinzipiell aus dem Stand der Technik bekannt sind (beispielsweise aus DE 102014219550 A1), ermöglichen eine dreidimensionale, richtungsabhängige Messung der Magnetfeldstärken |Bx(P)|, |By(P)|, |Bz(P)| mit nur einem Magnetfeldsensor. Dabei kann die Empfindlichkeit derartiger Sensoren gegenüber konventionellen Magnetfeldsensoren wie Hall-Sensoren, TMR-Sensoren, Fluxgate-Sensoren, Pickup-Spulen oder dergleichen, deutlich höher sein (beispielsweise mit einer Auflösung von weniger als 1 pT/√(Hz) über einen hohen Messbereich von mehr als 1 Tesla), sodass prinzipiell ein größerer Arbeitsbereich oder Funktionsbereich des Verfahrens zur Ermittlung einer relativen Position realisierbar ist. Ferner können Anforderungen an einen benötigten Bauraum zur Unterbringung des Magnetfeldsensors vorteilhaft reduziert werden (mit bis zu wenigen Kubikzentimetern Bauraum; beispielsweise im Vergleich zu Empfängerspulen, die leicht einen Durchmesser von ca. zehn Zentimeter haben können). Außerdem eignet sich ein farbzentrenbasierter Magnetfeldsensor prinzipiell auch zur Vektormagnetometrie, d.h. einer gleichzeitigen Richtungsbestimmung der erfassten Magnetfelder. In einem Ausführungsbeispiel wird das Verfahren mit Modulationsfrequenzen im Bereich zwischen 10 Hz und 50 Hz betrieben, um eine hohe Sensorempfindlichkeit des farbzentrenbasierten Magnetfeldsensors vorteilhaft auszunutzen. Dabei können die Modulationsfrequenzen f1, f2, f3 sich beispielsweise jeweils um 3 Hz unterscheiden.

In einer Ausführungsform des Verfahrens weist die Magnetfelderfassungsvorrichtung drei Magnetfeldsensoren beschriebener Art auf, die wechselweise eine definierte, insbesondere orthogonale, Anordnung und folglich eine wechselweise definiert zueinander ausgerichtete, insbesondere orthogonal zueinander ausgerichtete, Sensitivität aufweisen. Ein jeweiliger Magnetfeldsensor erfasst die wirkenden Magnetfeldstärken |Bx(P)| bzw. |By(P)| bzw. |Bz(P)| und die Modulationsfrequenzen f1, f2, f3 der Magnetfelder B1, B2, B3.

In einer Ausführungsform des Verfahrens zur Ermittlung einer relativen Position umfasst die Magnetfelderfassungsvorrichtung zumindest einen Magnetfeldsensor, der als Empfängerspule, insbesondere RF-Spule, realisiert ist. Auf besonders einfache Weise kann das Verfahren realisiert werden unter Verwendung einer Magnetfelderfassungsvorrichtung, die zumindest drei Empfängerspulen, insbesondere RF-Spulen, umfasst. Dabei weisen die drei Empfängerspulen wechselweise eine definierte Anordnung zueinander, insbesondere eine wechselweise orthogonale Anordnung zueinander, auf. Jede der drei Empfängerspulen - bezeichnet mit Rx, Ry, Rz - erfasst die wirkenden Magnetfeldstärken der Magnetfelder B1, B2, B3 und deren Modulationsfrequenzen f1, f2, f3.

In einer Ausführungsform des Verfahrens, insbesondere zur Anwendung in einem häuslichen Innenbereich, wird zumindest eine Spule eines Induktionskochfelds und/oder zumindest eine Spule einer Induktivladestation als zumindest eine Emitterspule Tx1, Tx2, Tx3 der Magnetfelderzeugungsvorrichtung verwendet. Dabei wird eine - im ersten Fall unterhalb der Kochfläche des Induktionskochfelds befindliche - Spule derart betrieben, dass ein entsprechendes Magnetfeld erzeugt und emittiert wird. Insbesondere ist dabei denkbar, dass ein Einschalten und/oder Ausschalten und/oder eine Konfiguration eines Betriebs (beispielsweise hinsichtlich Magnetfeldstärke oder Modulationsfrequenz) der Spule unter Verwendung einer die Spule betreibenden Steuervorrichtung erfolgt. Insbesondere ist denkbar, dass dazu die Steuervorrichtung, insbesondere des Herds bzw. der Induktivladestation, mit dem Referenzgegenstand über eine Kommunikationsschnittstelle kommuniziert. Insbesondere eignet sich diese Ausführungsform für im häuslichen Innenbereich verwendete Roboter, beispielsweise Staubsaugroboter oder dergleichen. Auf diese Weise kann auf bereits bestehende Komponenten zurückgegriffen werden, sodass das Verfahren mit weniger gesondert benötigten Emitterspulen betrieben werden kann.

In einer Ausführungsform des Verfahrens zur Ermittlung einer relativen Position wird mittels zumindest einer Emitterspule Tx1, Tx2, Tx3 der Magnetfelderzeugungsvorrichtung ein Energiespeicher des ersten Gegenstands, zumindest zeitweise, induktiv geladen. Derart lässt sich eine weitere Funktionalität basierend auf zumindest einer Emitterspule des Systems bereitstellen. In einem Ausführungsbeispiel kann der Referenzgegenstand als eine Art Docking-Station für den ersten Gegenstand realisiert sein, wobei der erste Gegenstand induktiv durch eine Emitterspule des Referenzgegenstands geladen wird, sobald er sich in der Docking-Station befindet.

Die relative Position P des ersten Gegenstands bezüglich des zumindest einen Referenzgegenstands wird unter Verwendung einer Auswertevorrichtung aus den erfassten, über die erfassten Modulationsfrequenzen f1, f2, f3 den gerichteten Magnetfeldern B1, B2, B3 zuordenbaren Magnetfeldstärken |Bx(P)|, |By(P)|, |Bz(P)|, ermittelt. Die Auswertevorrichtung ist zur Durchführung der entsprechenden Verfahrensschritte der Ermittlung der relativen Position speziell eingerichtet. Entsprechende Verfahrensschritte können dabei, zumindest teilweise, in Form von Software, insbesondere in Form eines computerimplementierten Verfahrens, oder in einer Mischung aus Software und Hardware realisiert sein. Beispielsweise kann die Auswertevorrichtung in Form einer elektrischen Schaltung realisiert sein und insbesondere einen Bandpassfilter und/oder einen Verstärker umfassen. Insbesondere umfasst die Auswertevorrichtung eine Prozessorvorrichtung zur Durchführung entsprechender Verfahrensschritte. Es ist denkbar, die Auswertevorrichtung dem ersten Gegenstand zugeordnet, dem Referenzgegenstand zugeordnet oder auch getrennt von diesen, beispielsweise in einer Cloud, einem separaten Computer oder dergleichen, zu realisieren. Dabei kann die Auswertevorrichtung eine Steuerelektronik aufweisen, die insbesondere auch Mittel zur Kommunikation mit anderen Komponenten, beispielsweise der Magnetfelderfassungsvorrichtung, der Magnetfelderzeugungsvorrichtung etc., umfasst. Ferner kann die Prozessorvorrichtung zumindest auf eine Speichervorrichtung zurückgreifen, in der Algorithmen, zumindest teilweise, als maschinenlesbares Computerprogramm hinterlegt sind. Das Computerprogramm enthält Anweisungen, die bei Ausführung durch die Prozessorvorrichtung der Auswertevorrichtung die Prozessorvorrichtung veranlassen, die relative Position P des ersten Gegenstands bezüglich des zumindest einen Referenzgegenstands aus den erfassten Magnetfeldstärken |Bx(P)|, |By(P)|, |Bz(P)| zu ermitteln.

In einer Ausführungsform des Verfahrens zur Ermittlung einer relativen Position werden in einem weiteren Verfahrensschritt die Modulationsfrequenzen f1, f2, f3 von der Magnetfelderzeugungsvorrichtung zur Magnetfelderfassungsvorrichtung und/oder zur Auswertevorrichtung übermittelt, wobei die übermittelten Modulationsfrequenzen f1, f2, f3 zur Verbesserung eines Signal-Rausch-Verhältnisses beim Ermitteln der relativen Position P verwendet werden. Beispielsweise können die übermittelten Modulationsfrequenzen zur präziseren Erfassung der Modulationsfrequenzen, insbesondere zur Ermittlung der Modulationsfrequenzen aus einem zeitlichen Verlauf der erfassten Magnetfeldstärken |Bx(P)|, |By(P)|, |Bz(P)|, verwendet werden. Insbesondere kann eine Kenntnis der Phasenbeziehung zwischen der Magnetfelderzeugungsvorrichtung (d.h. der Emitterspulen Tx1, Tx2, Tx3) und der Magnetfelderfassungsvorrichtung zur Verbesserung einer Genauigkeit bei der Durchführung des Verfahrens, insbesondere bei der Ermittlung der relativen Position, genutzt werden. In einer Ausführungsform des Verfahrens zur Ermittlung einer relativen Position werden die Modulationsfrequenzen f1, f2, f3 mittels einer Funkverbindung übermittelt. Beispielsweise eigenen sich für die Funkverbindung eine LoRa-, eine WLAN-, eine Bluetooth-Funkverbindung oder dergleichen. In einem Ausführungsbeispiel können die Modulationsfrequenzen im Bereich von 30 kHz liegen, während eine Übermittlung der Modulationsfrequenzen f1, f2, f3, insbesondere eine Synchronisation mit den Modulationsfrequenzen f1, f2, f3, durch eine Funkverbindung - insbesondere als Trägersignal - erfolgt, die ein 30 MHz Signal aufweist. Über die Funkverbindung kann alternativ oder zusätzlich ein Synchronisationsimpuls und/oder ein Vielfaches der Frequenzen f1, f2, f3 übertragen werden.

In einer Ausführungsform des Verfahrens zur Ermittlung einer relativen Position werden die übermittelten Modulationsfrequenzen als Referenzsignal eines Lock-in-Verstärkers der Magnetfelderfassungsvorrichtung und/oder der Auswertevorrichtung verwendet. Auf diese Weise kann selbst bei großen Abständen zwischen der Magnetfelderzeugungsvorrichtung und der Magnetfelderfassungsvorrichtung, die ein schlechtes Signal-zu-Rauschverhältnis bedingen, mittels der Vorgabe der Frequenzen auf besonders einfache Weise ein jeweiliges erfasstes Magnetfeld B1, B2, B3 über dessen Modulationsfrequenz identifiziert bzw. zugeordnet werden, indem in einem zeitlichen Verlauf der erfassten Magnetfeldstärken |Bx(P)|, |By(P)|, |Bz(P)| über den synchronisierten Lockin-Verstärker die entsprechenden Modulationsfrequenzen herausfilterbar und somit detektierbar sind.

In einer Ausführungsform des Verfahrens zur Ermittlung einer relativen Position wird die relative Position P des ersten Gegenstands, insbesondere wahlweise, bezüglich einer Mehrzahl von Referenzgegenständen ermittelt, wobei jeder Referenzgegenstand eine zugeordnete Magnetfelderzeugungsvorrichtung umfasst. Derart kann insbesondere zwischen gerichteten Magnetfeldern B1, B2, B3, die von unterschiedlichen Magnetfelderzeugungsvorrichtungen mit unterscheidbaren Frequenzen erzeugt werden, umgeschaltet werden. Eine Ermittlung einer relativen Position ist bezüglich verschiedener Referenzgegenstände möglich. Für die Magnetfelderzeugungsvorrichtungen der Referenzgegenstände gelten alle Ausführungen, die auch bezüglich der Magnetfelderzeugungsvorrichtung des zumindest einen Referenzgegenstands gemacht wurden. Insbesondere ist denkbar, relative Positionen P parallel oder sukzessiv oder auch als Mittelwert bezüglich mehrerer Referenzen zu ermitteln. Es ist denkbar, die relative Position bezüglich zwei, drei oder mehr Referenzgegenständen zu ermitteln. Beispielsweise kann bei einer Drohne, die dazu vorgesehen ist, Pakete auszuliefern, vorgesehen sein, insbesondere wahlweise, eine relative Position bezüglich des Erdbodens (z.B. bezüglich einer Landeposition) und bezüglich des Pakets, insbesondere einer Oberseite des Pakets, zu ermitteln.

Insbesondere lassen sich damit aus den ermittelten relativen Positionen des ersten Gegenstands bezüglich der Mehrzahl von Referenzgegenständen auch die wechselseitigen relativen Positionen der Mehrzahl von Referenzgegenständen untereinander bestimmen (Bestimmung P1 zwischen Referenzgegenstand 1 und erstem Gegenstand, Bestimmung P2 zwischen Referenzgegenstand 2 und erstem Gegenstand, daraus ist P3 (= P1 + P2) zwischen Referenzgegenstand 1 und Referenzgegenstand 2 bestimmbar).

In einer alternativen, insbesondere analogen, Ausführungsform des Verfahrens zur Ermittlung einer relativen Position wird die relative Position P eines Referenzgegenstands, insbesondere wahlweise, bezüglich einer Mehrzahl von ersten Gegenständen ermittelt, wobei jeder Referenzgegenstand eine zugeordnete Magnetfelderzeugungsvorrichtung umfasst und jeder erste Gegenstand eine zugeordnete Magnetfelderfassungsvorrichtung umfasst. In dieser Ausführungsform wird die relative Position P einer Mehrzahl von ersten Gegenständen, insbesondere wahlweise, bezüglich zumindest einem Referenzgegenstand ermittelt. Da es sich lediglich um einen Austausch von Magnetfelderzeugungsvorrichtung und Magnetfelderfassungsvorrichtung handelt, wird diese Ausführungsform als analog betrachtet.

In einer Ausführungsform des Verfahrens zur Ermittlung einer relativen Position codiert jede Modulationsfrequenz f1, f2, f3 der Magnetfelder B1, B2, B3 jeweils eine Systeminformation und/oder codieren alle Modulationsfrequenzen f1, f2, f3 gemeinsam eine Systeminformation. Insbesondere ist denkbar, über die Modulationsfrequenzen weitere Informationen über den Referenzgegenstand und/oder über anderweitige, das System betreffende Eigenschaften (z.B. Ort, Identifikationsnummer oder dergleichen) dem ersten Gegenstand und/oder der Auswertevorrichtung bereitzustellen. Auf diese Weise kann neben der relativen Position zumindest eine weitere Information dem ersten Gegenstand und/oder der Auswertevorrichtung übermittelt und derart bereitgestellt werden. Beispielsweise kann eine Zuordnung bzw. Unterscheidbarkeit von relativen Positionen, die zu unterschiedlichen Referenzgegenständen ermittelt werden, über die Codierung erreicht werden (Codierung beispielsweise über eine jedem Referenzgegenstand zugeordnete ID).

In einer Ausführungsform des Verfahrens zur Ermittlung einer relativen Position wird ein Einfluss eines Störfelds erfasst und eine erfasste Magnetfeldstärke |Bx(P)|, |By(P)|, |Bz(P)| mittels der Auswertevorrichtung um den Einfluss des Störfelds korrigiert und/oder der Einfluss des Störfelds durch Steuern und/oder Regeln eines, mittels zumindest einer Kompensationsspule emittierten, elektromagnetischen Überlagerungsfelds beim Erfassen der Magnetfeldstärken |Bx(P)|, |By(P)|, |Bz(P)| kompensiert. Auf diese Weise ist es möglich, eine relative Position präziser zu ermitteln. Alternativ oder zusätzlich kann eine Anforderung an die Empfindlichkeit der Magnetfelderfassungsvorrichtung vorteilhaft reduziert werden. Insbesondere lassen sich derart an dem Ort des ersten Gegenstands befindliche magnetische Störfelder vorteilhaft kompensieren. Insbesondere lassen sich derartige Störfelder mit einer elektrischen Kompensationsschaltung erfassen und kompensieren. Dabei kann die Kompensationsschaltung neben zumindest einer Kompensationsspule ferner Empfangsspulen, Verstärker etc. umfassen. Die Empfangsspule(n) und/oder Kompensationsspule(n) befindet sich dabei möglichst nah an der Magnetfelderfassungsvorrichtung. Ferner ist denkbar, einen zumindest während eines Zeitraums, in dem die Magnetfelder B1, B2, B3 erfasst werden, wirkenden Einfluss zu minimieren, insbesondere zu verhindern, und/oder zu kompensieren und/oder zu messen und später bei einer Auswertung zu kompensieren. Dabei kann eine das Verfahren durchführende Steuervorrichtung und/oder Auswertevorrichtung dazu eingerichtet sein, einen Einfluss zu kompensieren. Das Verfahren kann, zumindest teilweise, in Form von Software oder in einer Mischung aus Software und Hardware realisiert sein. Insbesondere ist denkbar, dass der Einfluss unter Verwendung einer im Wesentlichen zeitlich parallel zur Erfassung der Magnetfeldstärken |Bx(P)|, |By(P)|, |Bz(P)| durchgeführten Referenzmessung ermittelt wird. Insbesondere ist denkbar, dass der Einfluss während der Erfassung der Magnetfeldstärken |Bx(P)|, |By(P)|, |Bz(P)| in Abhängigkeit des ermittelten Einflusses aktiv kompensiert wird, beispielsweise durch Steuern und/oder Regeln und/oder Anpassen eines elektro-magnetischen Überlagerungsfelds, dass unter Verwendung der zumindest einen Kompensationsspule erzeugt wird. Alternativ oder zusätzlich ist denkbar, dass der Einfluss vermieden und/oder kompensiert wird, indem unter Verwendung der Daten, die zu dem Einfluss eines Störfelds erfasst werden, ein Zeitpunkt ermittelt wird, zu dem der Einfluss verhältnismäßig gering ist, insbesondere vernachlässigbar ist, wobei die Erfassung der Magnetfeldstärken |Bx(P)|, |By(P)|, |Bz(P)| zu diesem Zeitpunkt durchgeführt wird.

In einer Ausführungsform des Verfahrens zur Ermittlung einer relativen Position werden beim Ermitteln der relativen Position P weitere Positionsdaten, insbesondere weitere Positionsdaten einer weiteren internen und/oder externen Sensorvorrichtung, zur Steigerung der Präzision und/oder zur Ermittlung einer absoluten Position einbezogen. Unter "einbeziehen" ist dabei insbesondere auch fusionieren oder korrelieren zu verstehen. Die weiteren Positionsdaten können beispielsweise relative oder absolute Positionsdaten darstellen. Relative Positionsdaten können beispielsweise Positionsdaten von Beschleunigungssensoren, Drehratensensoren, Odometriedaten oder dergleichen sein. Absolute Positionsdaten können beispielsweise GPS- oder GNSS-Daten sein. Auch lassen sich Radar-, Lidar- oder Videosensoren zur Ermittlung einer Position verwenden. In einer Ausführungsform des Verfahrens werden die weiteren Positionsdaten als absolute Positionsdaten erfasst, wobei die relative Position P relativ zu diesen absoluten Positionsdaten ermittelt wird. Unter Verwendung absoluter Positionsdaten kann somit aus der ermittelten relativen Position eine absolute Position ermittelt werden. Ferner lässt sich mittels einer derartigen Sensorfusion insbesondere eine Plausibilitätsprüfung und/oder Korrektur der relativen Position durchführen und derart die erhaltenen relativen Positionen robuster machen. Ferner ist denkbar, über eine Sensorfusion mit anderen Sensordaten Verzerrungen in den erfassten Magnetfeldern, die sich auf Fehler in der ermittelten relativen Position auswirken, dynamisch zu erkennen. Insbesondere lassen sich durch eine derartige Fusion von Positionsdaten Magnetfeldverzerrungen (beispielsweise durch Störfelder induziert) in den Magnetfeldern B1, B2, B3 detektieren und mit diesem Wissen positionsabhängige Korrekturdaten ableiten und beispielsweise in einer Magnetfeldkarte hinterlegen, die sodann bei einer erneuten oder weiteren Ermittlung der relativen Position berücksichtigt werden. Ferner können solche Fehler beispielsweise über einen Machine-Learning Algorithmus zur Verbesserung der Positioniergenauigkeit verwendet werden. Dadurch können das Auftreten magnetischer Objekte und damit verbundene Störfelder (Magnetfeldverzerrungen) im laufenden Betrieb des Verfahrens erkannt und das Verfahren zur Ermittlung einer relativen Position dynamisch korrigiert werden. Insbesondere können Korrekturdaten laufend aktualisiert werden, sodass auch temporäre Magnetfeldverzerrungen schnell erkannt und entsprechende Korrekturdaten ermittelt werden können, die für zeitlich nachfolgende Ermittlungen einer relativen Position zur Verfügung stehen.

Entsprechend der Erfindung wird zur Ermittlung einer relativen Position eine relative Position P' des zumindest einen Referenzgegenstands bezüglich zumindest eines weiteren Referenzgegenstands ermittelt, umfassend:
- Erzeugen zumindest dreier gerichteter Magnetfelder B1', B2', B3' unterscheidbarer Modulationsfrequenzen f1', f2', f3' mittels einer dem weiteren Referenzgegenstand zugeordneten weiteren Magnetfelderzeugungsvorrichtung, wobei die weitere Magnetfelderzeugungsvorrichtung zumindest drei Emitterspulen Tx1', Tx2', Tx3' umfasst, die wechselweise eine definierte Anordnung zueinander aufweisen,
- Erfassen von Magnetfeldstärken |Bx'(P')|, |By'(P')|, |Bz'(P')| und Modulationsfrequenzen f1', f2', f3' der Magnetfelder B1', B2', B3' mittels einer Magnetfelderfassungsvorrichtung des Referenzgegenstands,
- Ermitteln der relativen Position P' des Referenzgegenstands bezüglich des zumindest einen weiteren Referenzgegenstands mittels einer Auswertevorrichtung aus den erfassten, über die erfassten Modulationsfrequenzen f1', f2', f3' den gerichteten Magnetfeldern B1', B2', B3' zuordenbaren Magnetfeldstärken |Bx'(P')], |By'(P')|, |Bz'(P')|.

Insbesondere ist auch denkbar, mehrere Referenzgegenstände gestaffelt hintereinander zu betreiben, wobei jeder "zwischengeschaltete" Referenzgegenstand zumindest eine Magnetfelderzeugungsvorrichtung und eine Magnetfelderfassungsvorrichtung aufweist, sodass dieser Referenzgegenstand sowohl Magnetfelder zur Ermittlung der eigenen relativen Position erfassen kann als auch Magnetfelder zur Ermittlung der relativen Position eines nachfolgenden ersten Gegenstands und/oder Referenzgegenstands erzeugen kann. Insbesondere sind ganze Ketten von gestaffelten Referenzgegenständen denkbar (Referenzgegenstand 1 - Referenzgegenstand 2 - Referenzgegenstand 3 - erster Gegenstand). Insbesondere dient auf diese Weise jeder "zwischengeschaltete" Referenzgegenstand als ein erster Gegenstand, dessen relative Position P bezüglich des vorhergehenden Referenzgegenstands ermittelt wird. Es sei angemerkt, dass die Magnetfelderfassungsvorrichtung und die Magnetfelderzeugungsvorrichtung dabei auch als ein einziges Bauteil realisiert sein kann, dass sowohl als Magnetfelderfassungsvorrichtung und als Magnetfelderzeugungsvorrichtung genutzt wird (beispielsweise als ein Spulensystem, dass in einem Empfangsmodus und in einem Sendemodus betrieben wird).

Auf diese Weise lassen sich vorteilhaft gestaffelte relative Positionen ermitteln. Anwendungsbeispiele hierfür können beispielsweise in einem Roboterschwarm navigierende Roboter sein, wobei eine Positionsbestimmung eines jeden Roboters relativ zu den anderen Robotern erfolgt, d.h. eine Lokalisierung der Roboter erfolgt untereinander. Werden dabei ferner relative Positionen der Roboter ausgetauscht, so ist eine gemeinsame Pfadplanung (Schwarmintelligenz) möglich. Diese könnte beispielsweise gezielt zur Erweiterung einer Reichweite oder dergleichen genutzt werden. Darüber hinaus kann das Verfahren auch auf die Steuerung von Roboterarmen etc. übertragen werden, wobei beispielsweise eine relative Position eines jeden einzeln beweglichen Teils des Roboterarms relativ zu jedem weiteren beweglichen Teil des Roboterarms ermittelbar ist. Für den zumindest einen weiteren Referenzgegenstand gelten alle in dieser Schrift ausgeführten Merkmale ebenfalls, beispielsweise dass in einem weiteren Verfahrensschritt die Modulationsfrequenzen f1', f2', f3' von der dem weiteren Referenzgegenstand zugeordneten weiteren Magnetfelderzeugungsvorrichtung zur Magnetfelderfassungsvorrichtung des Referenzgegenstands und/oder zur Auswertevorrichtung übermittelt werden, wobei die übermittelten Modulationsfrequenzen f1', f2', f3' ebenfalls zur Verbesserung eines Signal-Rausch-Verhältnisses beim Ermitteln der relativen Position P' verwendet werden.

In einer Ausführungsform des Verfahrens zur Ermittlung einer relativen Position P werden mittels zumindest einer weiteren Magnetfelderfassungsvorrichtung i des ersten Gegenstands, die eine definierte Anordnung zur Magnetfelderfassungsvorrichtung des ersten Gegenstands aufweist, Magnetfeldstärken |Bxᵢ(P)|, |Byᵢ(P)|, |Bzᵢ(P)| und Modulationsfrequenzen f1, f2, f3 der Magnetfelder B1, B2, B3 erfasst, wobei mittels einer Auswertevorrichtung eine Relation der Magnetfeldstärken |Bxᵢ(P)| und |Bx(P)| zueinander und/oder |Byᵢ(P)| und |By(P)| zueinander und/oder IBzᵢ(P)| und |Bz(P)| zueinander ermittelt wird. Unter einer definierten Anordnung ist insbesondere ein definierter Abstand und eine definierte Ausrichtung der Magnetfelderfassungsvorrichtungen i zueinander zu verstehen. Insbesondere wird die Relation als komponentenweise Relation der Magnetfeldstärken |Bxᵢ(P)| und |Bx(P)| zueinander und/oder |Byᵢ(P)| und |By(P)| zueinander und/oder |Bzᵢ(P)| und |Bz(P)| zueinander ermittelt. Unter einer Relation ist dabei eine grundsätzlich beliebige mathematische Beziehung zu verstehen, in der sich die Magnetfeldstärken, insbesondere komponentenweise, vergleichen lassen oder in Bezug zueinander setzen lassen. Insbesondere ist eine Differenz, ein Quotient, ein Größer-Kleiner-Verhältnis oder dergleichen denkbar. In einer Ausführungsform des Verfahrens zur Ermittlung einer relativen Position P wird die Relation, insbesondere in Form eines Magnetfeldgradientens, als Differenz |Bxᵢ(P)| - |Bx(P)|, |Byᵢ(P)| - |By(P)| bzw. |Bzᵢ(P)| - |Bz(P)| ermittelt. Auf diese Weise kann eine besonders einfache Relation angegeben werden, wobei der Magnetfeldgradient als paarweise gebildete Differenz ermittelt wird. Alternativ oder zusätzlich könnte eine relative Position P auch als Quotient |Bxᵢ(P)| / |Bx(P)|, |Byᵢ(P)| / |By(P)| bzw. |Bzᵢ(P)| / |Bz(P)| ermittelt werden. Ferner kann unter Verwendung der Relation auch eine Genauigkeit in der Ermittlung der relativen Position P erhöht werden.

In einer Ausführungsform des Verfahrens zur Ermittlung einer relativen Position P, bei dem die Relation als Differenz ermittelt wird, wird anhand eines Vorzeichens der Relation eine eindeutige Identifikation der, insbesondere ansonsten ggf. uneindeutigen (insbesondere mehrdeutigen), relativen Position P durchgeführt. In einer alternativen Ausführungsform des Verfahrens, bei dem die Relation als Quotient ermittelt wird, wird anhand eines Vergleichs der Relation mit dem Wert 1 eine eindeutige Identifikation der, insbesondere ansonsten ggf. uneindeutigen (insbesondere mehrdeutigen), relativen Position P durchgeführt. Dabei kann eine relative Position insbesondere auf Grund eines symmetrischen Verlaufs der von der Magnetfelderzeugungsvorrichtung erzeugten Magnetfelder B1, B2, B3 zunächst eine Mehrdeutigkeit aufweisen. Ein von einer Emitterspule erzeugtes Magnetfeld weist in Richtung senkrecht zur Wicklungsebene Regionen des Magnetfelds auf, an denen die Magnetfeldstärke minimal (ggf. 0 T) wird. Beidseitig von dieser Spiegelsymmetrieachse (die der Normalen zur Wicklungsebene der Emitterspule entspricht) und spiegelsymmetrisch zur Wicklungsebene der Emitterspule befinden sich Regionen identischer Magnetfeldstärke, sodass ein (ideales, ungestörtes) Magnetfeld grundsätzlich vier Bereiche gleicher Magnetfeldstärke umfasst (die sich in vier Quadranten befinden, mit der Emitterspule im Zentrum). Erfindungsgemäß kann unter Verwendung der Relation eine geeignete Maßnahmen angegeben werden, um die relative Position trotz dieser Mehrdeutigkeiten einem Quadranten zuzuordnen. Insbesondere ist ein Übergang zwischen je zwei benachbarten Quadranten unter Anwendung des erfindungsgemäßen Verfahrens detektierbar. Dazu werden kontinuierlich die Relationen der erfassten Magnetfeldstärken ausgewertet und derart kontinuierlich Magnetfeldgradienten bestimmt. In einer Verfahrensimplementierung, in der die Relation als Differenz ermittelt wird, kehrt sich das Vorzeichen der Relation (der Differenz) um, sobald ein Übergang zwischen zwei Quadranten erfolgt ist. In einer Verfahrensimplementierung, in der die Relation als Quotient ermittelt wird, wandelt sich der Quotient von einem Wert größer als eins zu einem Wert kleiner als eins, sobald ein Übergang zwischen zwei Quadranten erfolgt ist. Somit lassen sich Übergänge des ersten Gegenstands zwischen verschiedenen Quadranten bestimmen. Folglich kann derart auch eine eindeutige Zuordnung der, insbesondere ansonsten ggf. uneindeutigen (insbesondere mehrdeutigen), relativen Position P des ersten Gegenstands zu einem der vier Quadranten durchgeführt werden, insbesondere unter der Annahme, dass zu Beginn einer Bewegung des ersten Gegenstands die Ausgangsposition einem der Quadranten zuordenbar ist (z.B. weil sich dort die Basisstation befindet). Bewegt sich beispielsweise ein erster Gegenstand, der als Roboter denkbar ist, so lassen sich kontinuierlich Relationen ermitteln. Wechselt diese Relation dann das Vorzeichen (bzw. von einem Wert größer als eins zu einem Wert kleiner als eins (oder umgekehrt)), so kann ein Übergang zwischen zwei aneinander angrenzenden Quadranten abgeleitet werden.

In einer Ausführungsform des Verfahrens zur Ermittlung einer relativen Position P wird mittels einer rotationssensitiven Sensorvorrichtung eine Bewegungsrichtungsänderung, insbesondere eine Bewegungsrichtungsumkehr um 180°, des ersten Gegenstands erfasst wird, wobei im Falle einer Bewegungsrichtungsänderung des ersten Gegenstands, insbesondere um mehr als 90°, eine Vorzeichenumkehr der Relation bzw. eine Inversion der Relation (Wertewechsel von kleiner eins zu größer eins (oder umgekehrt) durch Kehrwertbildung) berücksichtigt, insbesondere durchgeführt, wird. Auf diese Weise kann ferner ausgeschlossen werden, dass eine Veränderung der Bewegungsrichtung, insbesondere eine Bewegungsrichtungsänderung um 180°, zu einer (unbemerkten bzw. unerwarteten) Veränderung der Relation führt, die ansonsten durch einen Quadrantenübergang erzeugt wird. Unter "berücksichtigen" ist insbesondere zu verstehen, dass ein derartiger Wertewechsel rechnerisch in einer Auswertung berichtigt bzw. kompensiert wird. Unter einer rotationssensitiven Sensorvorrichtung ist insbesondere eine Sensorvorrichtung zu verstehen, die auf eine räumliche Drehung und/oder Richtungsänderung des ersten Gegenstands sensitiv ist (beispielsweise realisiert durch Beschleunigungssensoren, Kameras oder dergleichen). Hierfür eignen sich grundsätzlich alle Sensoren, mittels der eine Information über eine Bewegungsrichtung des ersten Gegenstands ableitbar ist. Beispielsweise
- magnetfeldsensitive Sensoren wie beispielsweise Kompass, Magnetfeldsensor, Fluxgate-Magnetometer und Hall-Sensor;
- kapazitive Sensoren;
- positionssensitive und/oder lagesensitive Sensoren wie beispielsweise GPS, Positionssensor, Odometriesensor und Einschlagwinkelsensor für ein Lenkrad oder Steuerrad;
- geschwindigkeitssensitive und/oder beschleunigungssensitive Sensoren wie beispielsweise Gyroskop, Inertialsensorik und Beschleunigungssensoren;
- abstandssensitive Sensoren wie beispielsweise Laserentfernungsmesser, Ultraschallsensoren und Radar, ...
- drucksensitive Sensoren,
- optische Sensoren,
- spannungssensitive und/oder stromsensitive Sensoren
oder eine Kombination derer.

Es sei angemerkt, dass eine Bestimmung einer Ausrichtung (und damit der Bewegungsrichtung des ersten Gegenstands) prinzipiell auch über die bereits vorhandene Magnetfelderfassungsvorrichtung erfolgen kann, indem ein DC-Gleichanteil in den Messsignalen des erfassten Magnetfelds ausgewertet wird. Dies hat den Vorteil, dass kein zusätzlicher Drehratensensor oder Kompass bereitgestellt werden muss.

Alternativ oder zusätzlich ist denkbar, eine Phasenlage der Magnetfelder B1, B2, B3 mittels eines Sensors zu messen, um daraus eine eindeutige Identifikation der, insbesondere ansonsten ggf. uneindeutigen (insbesondere mehrdeutigen), relativen Position P des ersten Gegenstands bezüglich des Referenzgegenstands zu ermitteln.

Ferner lassen sich auf diese Weise Störfelder, wie sie beispielsweise durch metallische Gegenstände wie Fahrzeuge oder vergrabene Objekte erzeugt werden, besonders effizient erfassen. In einer Ausführungsform des Verfahrens zur Ermittlung einer relativen Position P werden zur Detektion von Magnetfeldverzerrungen Abweichungen der Relation von gemäß der definierten Anordnung der Magnetfelderfassungsvorrichtung und der zumindest einen weiteren Magnetfelderfassungsvorrichtung i erwarteten Soll-Relationen ausgewertet, insbesondere identifiziert. Mit anderen Worten können - da Abstand und Winkel der Magnetfeldsensoren zueinander bekannt sind - die Werte der erfassten Magnetfelder der einzelnen Magnetfelderfassungsvorrichtungen zu einem Abgleich mit auf Basis der Anordnung erwarteten Werten genutzt werden. Dies kann insbesondere während einer Bewegung des ersten Gegenstands ausgewertet werden und derart unerwartete Störfelder, d.h. Magnetfeldverzerrung, detektiert und erfasst werden. Insbesondere lassen sich derart Abweichungen auf besonders einfache Weise detektieren und daraus auf Störfelder schließen.

In einer Ausführungsform des Verfahrens zur Ermittlung einer relativen Position P werden detektierte Magnetfeldverzerrungen bzw. Störfelder in einer Magnetfeldkarte, insbesondere einer zweidimensionalen oder dreidimensionalen Magnetfeldkarte, gespeichert, insbesondere aktualisiert und/oder fusioniert. Unter "fusionieren" ist dabei insbesondere "überschreiben", "mitteln", "interpolieren", "extrapolieren", "korrelieren" oder dergleichen mit anderen Sensordaten zu verstehen. Derart können erfasste Magnetfeldinhomogenitäten und/oder Störfelder bei einer Durchführung des Verfahrens zur Ermittlung einer relativen Position berücksichtigt werden.

In einer Ausführungsform des Verfahrens zur Ermittlung einer relativen Position P werden zwei weitere Magnetfelderfassungsvorrichtungen i verwendet. Insbesondere weisen die drei Magnetfelderfassungsvorrichtungen i eine ein Dreieck bildende Anordnung zueinander auf. Auf diese Weise lassen sich die Relationen, insbesondere Magnetfeldgradienten, auf einfache Weise in 2 unabhängige Richtungen, insbesondere zwei orthogonale Richtungen, ermitteln.

In einer Ausführungsform des Verfahrens zur Ermittlung einer relativen Position P wird in einem weiteren Verfahrensschritt das Vorhandensein zumindest eines Magnetfelds BSQ einer externen Strahlungsquelle, insbesondere einer nicht dem Referenzgegenstand zugeordneten Magnetfelderzeugungsvorrichtung, detektiert. Derart kann erfasst werden, ob neben den zur Durchführung des Verfahrens zur Ermittlung einer relativen Position erzeugten Magnetfeldern B1, B2, B3 weitere Magnetfelder, beispielsweise Störfelder anderer Magnetfeldquellen oder auch Magnetfelder weiterer Referenzgegenstände, vorhanden sind. Insbesondere kann diese Detektion wiederholt, insbesondere regelmäßig wiederholt, beispielsweise quasi-kontinuierlich oder kontinuierlich, durchgeführt werden. Erfindungsgemäß kann diese Information dazu genutzt werden, das Verfahren zur Ermittlung einer relativen Position P anzupassen oder zu verbessern.

In einer Ausführungsform des Verfahrens zur Ermittlung einer relativen Position P wird das Vorhandensein des zumindest einen Magnetfelds BSQ mittels der Magnetfelderfassungsvorrichtung des ersten Gegenstands und/oder mittels der dem Referenzgegenstand zugeordneten Magnetfelderzeugungsvorrichtung und/oder mittels zumindest eines zusätzlichen Empfängers detektiert. Insbesondere ist denkbar, dass mittels der Magnetfelderfassungsvorrichtung das Vorhandensein des zumindest einen Magnetfelds BSQ durch ein aufgrund des Magnetfelds BSQ veränderten "Empfangsspektrum" im Sinne der erwarteten Magnetfelder B1, B2, B3 und deren zugehöriger Modulationsfrequenzen f1, f2, f3 detektiert wird. Ferner ist denkbar, dass das Vorhandensein des zumindest einen Magnetfelds BSQ mittels der Magnetfelderzeugungsvorrichtung erfasst wird, indem diese in einem Empfangsmodus betrieben wird. Dieser Empfangsmodus kann beispielsweise dadurch realisiert werden, dass in einer Sendepause der Magnetfelderzeugungsvorrichtung eine Emitterspule oder mehrere Emitterspulen kurzzeitig mit einer Empfangselektronik verbunden wird bzw. werden. Ein zusätzlicher Empfänger kann als ein grundsätzlich beliebig ausgestalteter Magnetfeldsensor, beispielsweise als ein Hall-Sensor oder dergleichen, realisiert sein.

In einer Ausführungsform des Verfahrens zur Ermittlung einer relativen Position P werden in Abhängigkeit des Vorhandenseins des zumindest einen Magnetfelds BSQ die Modulationsfrequenzen f1, f2, f3 gewählt, insbesondere modifiziert. In einer alternativen oder zusätzlichen Ausführungsform des Verfahrens zur Ermittlung einer relativen Position P werden in Abhängigkeit des Vorhandenseins des zumindest einen Magnetfelds BSQ Pausenzeiten in der Modulation t1, t2, t3 der Magnetfelder B1, B2, B3 gewählt, insbesondere modifiziert. In einer wiederum alternativen oder zusätzlichen Ausführungsform des Verfahrens zur Ermittlung einer relativen Position P werden in Abhängigkeit des Vorhandenseins des zumindest einen Magnetfelds BSQ Pausenzeiten in der Erzeugung T1, T2, T3 der Magnetfelder B1, B2, B3 gewählt, insbesondere modifiziert. Insbesondere lassen sich die Modulationsfrequenzen f1, f2, f3 und/oder Pausenzeiten in der Modulation t1, t2, t3 und/oder Pausenzeiten in der Erzeugung T1, T2, T3 derart modifizieren oder wählen, dass eine auf die externe Strahlungsquelle angepasste Erzeugung derselben erfolgt. Alternativ oder zusätzlich kann das Vorhandensein des zumindest einen Magnetfelds BSQ auch einem Anwender des Verfahrens zur Ermittlung einer relativen Position P ausgegeben werden.

In einer Ausführungsform des Verfahrens zur Ermittlung einer relativen Position P umfasst die Detektion des Vorhandenseins zumindest eines Magnetfelds BSQ einer externen Strahlungsquelle zumindest eine Ermittlung einer Modulationsfrequenz fSQ des zumindest einen Magnetfelds BSQ. Dabei können die Modulationsfrequenzen f1, f2, f3 der Magnetfelder B1, B2, B3 vorteilhaft unterschiedlich von der Modulationsfrequenz fSQ gewählt werden. Auf diese Weise kann der Frequenzbereich des Magnetfelds BSQ explizit ausgenommen werden, sodass die genutzten Modulationsfrequenzen f1, f2, f3 unterscheidbar, d.h. insbesondere weit genug im Frequenzband beabstandet von fSQ, sind. Dabei können die Abstände im Frequenzband insbesondere abhängig von einer Qualität bei der Erfassung der Magnetfelder B1, B2, B3 gewählt werden, sodass diese Abstände bei hohe Qualität (und folglich bereits recht präziser Ermittlung der relativen Position P) kleiner ausfallen können.

In einer Ausführungsform des Verfahrens zur Ermittlung einer relativen Position P umfasst die Detektion eine Ermittlung von Pausenzeiten in der Modulation tSQ und/oder Pausenzeiten in der Erzeugung TSQ des zumindest einen Magnetfelds BSQ. Dabei können die Pausenzeiten in der Modulation t1, t2, t3 bzw. die Pausenzeiten in der Erzeugung T1, T2, T3 der Magnetfelder B1, B2, B3 vorteilhaft derart gewählt werden, dass die Modulation der Magnetfelder B1, B2, B3 in den Pausenzeiten in der Modulation tSQ bzw. die Erzeugung der Magnetfelder B1, B2, B3 in den Pausenzeiten in der Erzeugung TSQ des zumindest einen Magnetfelds BSQ erfolgt. Auf diese Weise können gezielt Pausenzeiten im externen Magnetfeld BSQ - in dessen Modulation und/oder in dessen Erzeugung, d.h. Emission - explizit bei einer Erzeugung der Magnetfelder B1, B2, B3 genutzt werden, indem in diesen Pausenzeiten die Erzeugung der Modulation mit der Modulationsfrequenz f1, f2, f3 erfolgt bzw. in diesen Pausenzeiten die Erzeugung der Magnetfelder B1, B2, B3 an sich erfolgt. Ferner lassen sich zeitliche Abstände - zwischen der Erzeugung der Magnetfelder bzw. zwischen den Modulationen der Magnetfelder - derart wählen, dass eine möglichst störungsfreie und überlappungsfreie Erfassung der Magnetfelder B1, B2, B3 gewährleistet ist.

In einer Ausführungsform des Verfahrens zur Ermittlung einer relativen Position P wird das Magnetfeld BSQ der externen Strahlungsquelle, insbesondere der nicht dem Referenzgegenstand zugeordneten Magnetfelderzeugungsvorrichtung, verwendet, um die Reichweite des Verfahrens zur Ermittlung der relativen Position P des ersten Gegenstands zu vergrößern. Dabei ist denkbar, dass im Abstand maximaler Reichweite des ersten Referenzgegenstands (d.h. in einem Abstand, in dem noch ein Magnetfeld B1, B2, B3 erfassbar ist) weitere "Satelliten-Referenzgegenstände" installiert werden, die beispielsweise in den Sendepausen auf anderen Frequenzen senden. Prinzipiell können die "Satelliten-Referenzgegenstände" aber auch auf den gleichen Frequenzen f1, f2, f3 senden, wenn eine andere Frequenzabfolge - beispielsweise f2, f1, f3 - angewandt und überwacht wird.

In einer Ausführungsform des Verfahrens zur Ermittlung einer relativen Position P stammt das Magnetfeld BSQ der externen Strahlungsquelle, insbesondere der nicht dem Referenzgegenstand zugeordneten Magnetfelderzeugungsvorrichtung, von einem parallel betriebenen Verfahren nach einem der vorhergehenden Ansprüche. Auf diese Weise wird ermöglicht, mehrere Verfahren zur Ermittlung einer relativen Position P - gleichbedeutend mit mehreren Systemen, die das Verfahren implementieren - parallel zueinander zu betreiben. Beispielsweise können mehrere autonome Rasenmäher unter Anwendung des erfindungsgemäßen Verfahrens parallel betrieben werden, wie dies in einer Nachbarschaft der Fall sein kann. Dabei werden Pausenzeiten eines Robotersystems (umfassend einen Referenzgegenstand und einen in dem Roboter integrierten ersten Gegenstand) ermittelt, wobei das weitere Robotersystem dann die eigenen Sendeaktivitäten in zuvor ermittelte Pausenzeiten legt. Insbesondere senden die anderen Robotersysteme dann auf anderen Frequenzen und/oder in den Pausenzeiten der anderen Robotersysteme. Ferner kann oben genannter Schwarm von Robotern auch unter Anwendung dieser Ausführungsform des Verfahrens realisiert werden.

In einer Ausführungsform des Verfahrens zur Ermittlung einer relativen Position P ist der erste Gegenstand als ein handgehaltenes elektrisches Gerät, insbesondere ein Laserentfernungsmesser, eine Handwerkzeugmaschine, ein Gaming-Controller oder dergleichen, realisiert und abhängig von der relativen Position P wird eine Funktion, insbesondere des handgehaltenen elektrischen Geräts, gesteuert. Der Referenzgegenstand kann dabei im Raum ortsfest positioniert sein. Dabei dient die Implementierung des Verfahrens zur, insbesondere dreidimensionalen, Positionsbestimmung des elektrischen Geräts im Raum. Das elektrische Gerät kann beispielsweise als ein Laserentfernungsmesser realisiert sein, wobei abhängig von einer relativen Position des Laserentfernungsmesser eine weitere Messfunktionalität, insbesondere eine Messung indirekter Abstände, ermöglicht wird, wie dies beispielsweise in DE 102016211742.4 A1 oder in DE 102018201692.5 A1 offenbart ist. Ebenfalls kann eine Implementierung des Verfahrens zur räumlichen Verfolgung der relativen Position (hier relative Lage und Orientierung) eines Ortungsgeräts genutzt werden, sodass ein räumlicher Verlauf von Ortungsobjekten, die beispielsweise in einer Wand verborgen sind, positionsabhängig und dreidimensional erfasst werden. Die Daten umfassend Ortungsinformation und relative Position können anschließend zur Dokumentation und weiteren Planung in digitalen Modellen genutzt werden (vgl. "Building Information Modeling").

Im Gegensatz zu Inertialsensorik, wie sie im Stand der Technik oftmals Anwendung findet, kann das erfindungsgemäße Verfahren ferner vorteilhaft auch zur Ermittlung einer relativen Position einer vibrierenden Maschine, beispielsweise einer Schlagbohrmaschine, genutzt werden. Dabei kann bei einer Bohrmaschine beispielsweise abhängig von einer Nutzervorgabe, zum Beispiel "Ausführung einer waagerechten Bohrung", auf Basis der ermittelten relativen Position der Bohrmaschine dem Nutzer mitgeteilt werden, auf welche Weise die Zielausrichtung erreicht wird und wenn die Zielausrichtung erreicht ist. Ferner kann insbesondere eine Genauigkeit in der Ermittlung der Position gegenüber Inertialsensorik deutlich erhöht werden. Ebenfalls sind elektrische Geräte der Unterhaltungselektronik wie beispielsweise AR-Brillen, Game-Controller oder dergleichen, denkbar, deren relative Position unter Anwendung des erfindungsgemäßen Verfahrens ermittelt wird.

In einer Ausführungsform des Verfahrens zur Ermittlung einer relativen Position P ist der erste Gegenstand als ein, insbesondere autonomer, Roboter, insbesondere ein Roboterfahrzeug wie Logistikroboter, ein Staubsauger oder Rasenmäher oder dergleichen, realisiert und abhängig von der relativen Position P wird eine Funktion, insbesondere des Roboterfahrzeugs, gesteuert. Unter einem, insbesondere autonomen, Roboter soll insbesondere ein zumindest teilweise automatisches mobiles Gerät verstanden werden, welches eine Arbeit, beispielsweise eine Bearbeitung einer Fläche, zumindest teilweise selbsttätig verrichtet. Darüber hinaus soll insbesondere ein Gerät verstanden werden, das sich zumindest selbsttätig bewegt und/oder sich autonom in einem vorgegebenen Bereich, insbesondere in einem Arbeitsbereich oder in einer Bearbeitungsfläche, fortbewegt. T2pische Anwendungsgebiete solcher Roboterfahrzeuge umfassen vielfältige Tätigkeiten wie beispielsweise kehren, saugen, reinigen, Rasen mähen, (ein)sammeln, sortieren, bewässern, düngen, kartieren oder dergleichen. Der Referenzgegenstand kann dabei beispielsweise als Docking-Station (Basis-Station) des Roboters ortsfest positioniert sein, beispielsweise als Docking-Station eines autonomen Rasenmähers im Garten. Unter Implementierung dieses Verfahrens lassen sich Andock-Manöver (beispielsweise an die Docking-Station) besonders genau durchführen. Ferner kann eine Ermittlung der relativen Position in einem großen Bereich - vorteilhaft ohne Begrenzungsdraht, wie sie im Stand der Technik Anwendung finden, vgl. DE 102014226077.9 A1 - mit hoher Präzision erfolgen, insbesondere, indem auf aufwändige und ungenaue Sensorik wie Odometriesensorik (die anfällig ist auf Schlupf der Antriebsmittel) verzichtet werden kann. Für Roboter, die in einem häuslichen Innenbereich arbeiten, ist denkbar, eine Spule eines Induktionskochfelds und/oder eine Spule einer Induktivladestation (beispielsweise der Docking-Station) als zumindest eine Emitterspule Tx1, Tx2, Tx3 der Magnetfelderzeugungsvorrichtung zu nutzen.

In einer Ausführungsform des Verfahrens zur Ermittlung einer relativen Position P ist der erste Gegenstand als ein Flugobjekt, insbesondere als eine Drohne, realisiert und abhängig von der relativen Position P wird eine Funktion, insbesondere des Flugobjekts, ganz insbesondere der Drohne, gesteuert.

In einer Ausführungsform des Verfahrens zur Ermittlung einer relativen Position P wird unter Verwendung des ersten Gegenstands eine Begrenzung eines Arbeitsbereichs, insbesondere eines Arbeitsbereichs eines Roboters, ermittelt, indem der erste Gegenstand entlang zumindest einer Grenze des Arbeitsbereich geführt wird und sukzessiv ermittelte relative Positionen P aufgezeichnet und/oder ausgewertet werden. Insbesondere kann dabei der Referenzgegenstand bereits an einem Einsatzort platziert werden, wobei anschließend mit dem ersten Gegenstand - der beispielsweise als ein handhaltbarer Stab ausgebildet ist - der Arbeitsbereich durch Führen des Stabs entlang der Grenze des Arbeitsbereich lokalisiert wird. Die dabei aufgezeichnete Trajektorie kann digitalisiert und sodann zur Durchführung weiterer Verfahren, beispielsweise von Navigationsverfahren des Roboters, herangezogen werden. Auf diese Weise kann das erfindungsgemäße Verfahren zum Anlernen (teach-in) eines Roboters hinsichtlich eines Aktivitätsgebiets - beispielsweise eines autonomen Rasenmähers hinsichtlich eines zu mähenden Bereichs im Garten - genutzt werden. Dabei erlaubt das Verfahren auf Grund der hohen Präzision in der Ermittlung der relativen Position eine besonders feine Auflösung der Grenzen des Arbeitsbereichs, die beispielsweise mit einem Begrenzungsdraht (siehe Stand der Technik oben) nicht oder nur sehr aufwändig erreichbar ist.

In einer Ausführungsform des Verfahrens zur Ermittlung einer relativen Position P wird unter Verwendung des ersten Gegenstands eine Distanz, insbesondere ein Abstand oder eine Länge eines Pfades, zwischen einem ersten Punkt und einem zweiten Punkt ermittelt, indem der erste Gegenstand, insbesondere entlang des Pfades, von dem ersten Punkt zu dem zweiten Punkt geführt wird und sukzessiv ermittelte relative Positionen P aufgezeichnet und/oder ausgewertet werden. Ferner erlaubt es die Auswertung einer mittels des ersten Gegenstands zurückgelegten Trajektorie - beispielsweise zwischen zwei Punkten - einen Abstand dieser Punkte entlang der Trajektorie zu ermitteln. Ebenfalls kann der erste Gegenstand in Form eines handhaltbaren Stabs realisiert sein.

In einer Ausführungsform des Verfahrens zur Ermittlung einer relativen Position P ist zumindest der erste Gegenstand einem Roboterarm zugeordnet, insbesondere auch der Referenzgegenstand dem Roboterarm zugeordnet, und unter Verwendung sukzessiv ermittelter relativer Positionen P wird eine Bewegung und/oder eine Funktion, insbesondere des Roboterarms, gesteuert. Beispielsweise kann derart ein vollintegrierter Roboterarm realisiert werden, der ohne weitere aufwändige Sensorik (wie Inertialsensorik, Winkelmesser, Abstandsmesser oder dergleichen) jederzeit eine genaue Position jedes beweglichen Teils des Roboterarms auswerten und folglich steuern kann. Beispielsweise kann der Referenzgegenstand einem Tankstutzen eines Fahrzeugs zugeordnet sein, sodass ein autonom agierender Tankroboter dessen Füllpistole, die mit dem ersten Gegenstand ausgestattet ist, selbsttätig ausrichten und folglich das Fahrzeug selbsttätig betanken kann.

In einer Ausführungsform des Verfahrens zur Ermittlung einer relativen Position P ist der Referenzgegenstand einer Überwachungsanlage, insbesondere einem Rauchmelder oder Brandmelder zugeordnet, und eine relative Position P von einer mittels des ersten Gegenstands ausgestatteter Person wird erfasst. Beispielsweise kann der Referenzgegenstand in den Rauchmelder integriert sein. Derart lassen sich vorteilhaft Bewegungsprofile von Personen relativ zum Rauchmelder erfassen, die beispielsweise im Rahmen von Feuerwehreinsätzen zur Koordination und Absicherung der eingesetzten Feuerwehrleute genutzt werden können. Dabei ist denkbar, dass jede Person dem Körper zugeordnet einen ersten Gegenstand mit sich führt, dessen relative Position ermittelt wird. Ferner ist denkbar, dass über die Frequenzen f1, f2, f3 weitere Informationen - beispielsweise hinsichtlich einer Raumgröße, einer Position des Rauchmelders im Raum, im Raum befindlicher Gefahrengüter, eines Raumnamens oder dergleichen - codiert sind und derart dem ersten Gegenstand übertragen werden, sodass eine weitere Verarbeitung oder Ausgabe der Information erfolgen kann.

Ferner wird ein System vorgeschlagen, umfassend einen ersten Gegenstand, zumindest einen Referenzgegenstand sowie eine Auswertevorrichtung, wobei das System, insbesondere die Auswertevorrichtung, dazu eingerichtet ist, das erfindungsgemäße Verfahren auszuführen. Dabei gelten alle obigen Ausführungen hinsichtlich des Verfahrens und der im Verfahren angewandten Komponenten, insbesondere zu Magnetfelderfassungsvorrichtung, zur Magnetfelderzeugungsvorrichtung, zur Auswertevorrichtung etc., ebenfalls als für das System offenbart.

Ebenfalls wird ein erster Gegenstand und/oder ein Referenzgegenstand zur Verwendung in einem erfindungsgemäßen System bzw. zur Anwendung in einem erfindungsgemäßen Verfahren vorgeschlagen. Insbesondere wird ein erster Gegenstand vorgeschlagen, der realisiert ist als ein handgehaltenes elektrisches Gerät, insbesondere einen Laserentfernungsmesser, eine Handwerkzeugmaschine, einen Gaming-Controller oder dergleichen, als ein, insbesondere autonomer, Roboter, insbesondere ein Roboterfahrzeug wie ein Staubsauger oder Rasenmäher oder dergleichen, als ein Flugobjekt, insbesondere als eine Drohne, als handhaltbarer Stab und/oder als Teil eines Roboterarms. Insbesondere wird ein Referenzgegenstand vorgeschlagen, der realisiert ist als eine Docking-Station oder als ein Rauchmelder.

### Zeichnungen

Die Erfindung ist anhand von in den Zeichnungen dargestellten Ausführungsbeispielen in der nachfolgenden Beschreibung näher erläutert. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Gleiche Bezugszeichen in den Figuren bezeichnen gleiche Elemente.

Es zeigen:
- Figur 1: ein Ausführungsbeispiel eines erfindungsgemäßen Systems umfassend einen ersten Gegenstand und einen Referenzgegenstand;
- Figur 2: ein zweites Ausführungsbeispiel eines erfindungsgemäßen Systems umfassend einen ersten Gegenstand und einen Referenzgegenstand
- Figur 3: ein Verfahrensdiagramm zu einer exemplarischen Ausführungsform des erfindungsgemäßen Verfahrens zum Ermitteln einer relativen Position;
- Figur 4: ein exemplarisches Magnetfeld, wie es beispielhaft von einer Magnetfelderzeugungsvorrichtung eines Referenzgegenstands erzeugt wird;
- Figuren 5a-5f: unterschiedliche Szenarien, wie das erfindungsgemäße Verfahren angewandt werden kann;
- Figur 6: zeitabhängige Verläufe von Magnetfeldsignalen (a) zu einem beispielhaften System (b).

### Beschreibung der Ausführungsbeispiele

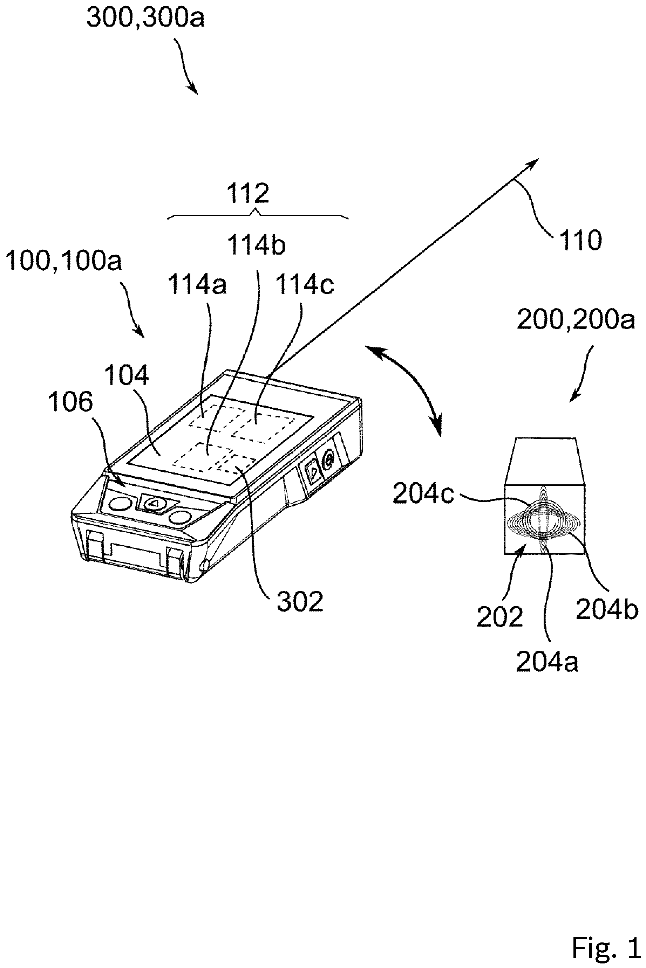

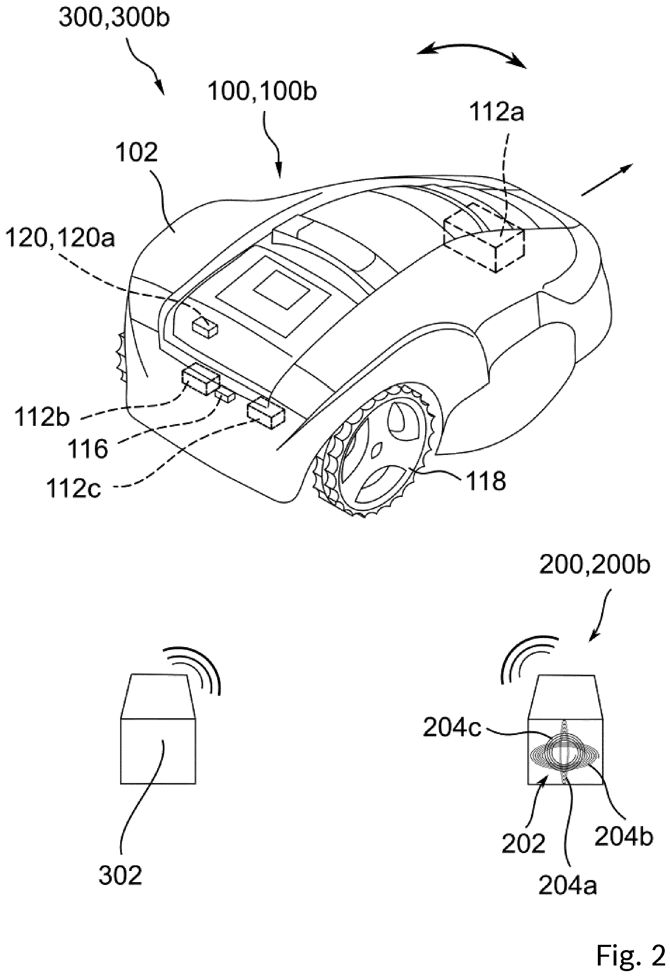

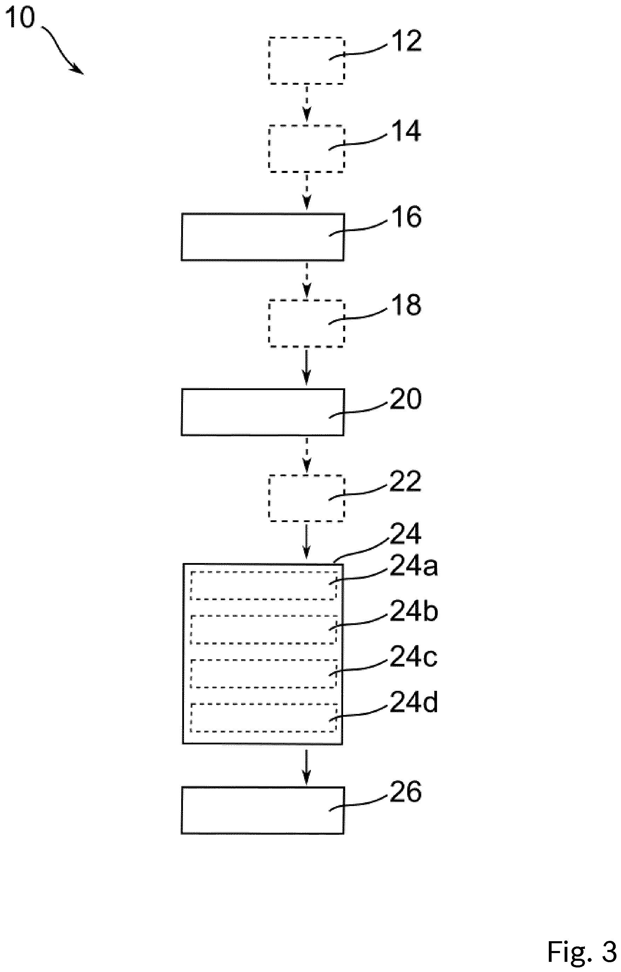

Das erfindungsgemäße Verfahren betrifft die Ermittlung einer relativen Position P eines ersten Gegenstands 100 bezüglich zumindest eines Referenzgegenstands 200. In Figuren 1 und 2 sind zwei beispielhafte Systeme 300a, 300b dargestellt, die jeweils einen ersten Gegenstand 100a, 100b, zumindest einen Referenzgegenstand 200a, 200b sowie eine Auswertevorrichtung 302 umfassen. Die Auswertevorrichtung 302 ist dazu eingerichtet, das erfindungsgemäße Verfahren 10, vgl. Figur 3, auszuführen.

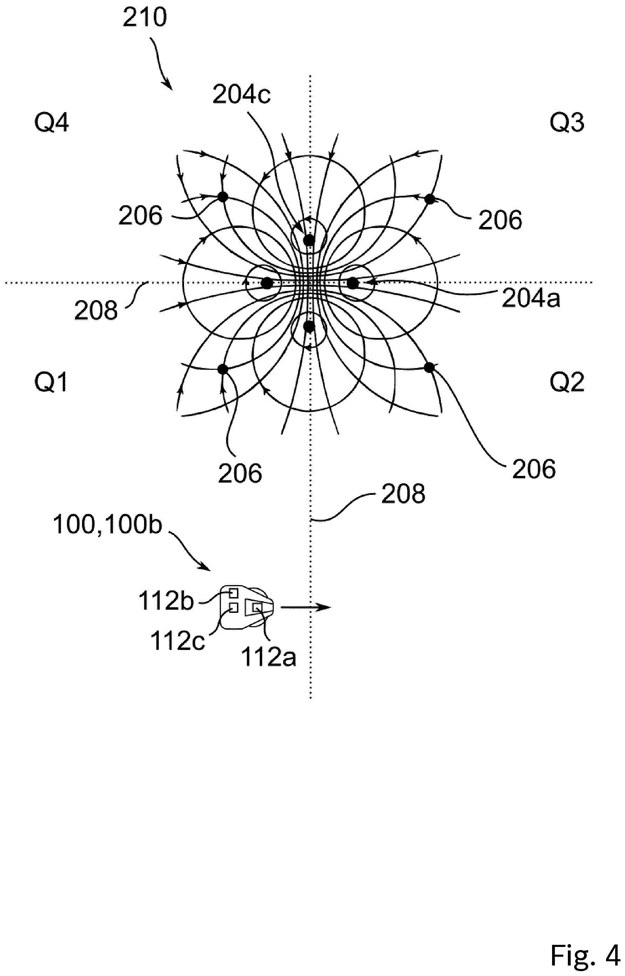

Das in Figur 1 dargestellte System 300, 300a zeigt in perspektivischer Darstellung einen ersten Gegenstand 100, 100a, der als ein handgehaltenes elektrisches Gerät, hier als ein Laserentfernungsmesser, realisiert ist. Der Laserentfernungsmesser weist ein Gehäuse, ein Display 104 sowie Betätigungselemente 106 zum Ein- und Ausschalten des Laserentfernungsmessers und zum Starten bzw. Konfigurieren eines Messvorgangs auf. Während eines Messvorgangs emittiert der Laserentfernungsmesser Laserstrahlung 110. Derartige Laserentfernungsmesser sind aus dem Stand der Technik bekannt. Die Position des ersten Gegenstands 100, 100a im dreidimensionalen Raum - hier durch den bidirektionalen Pfeil angedeutet, der eine freie Beweglichkeit des Laserentfernungsmessers darstellt - wird nach erfindungsgemäßem Verfahren 10 als relative Position P bezüglich zumindest eines Referenzgegenstands 200, 200a ermittelt. Der Referenzgegenstand 200, 200a ist dabei ortsfest, beispielsweise auf dem Fußboden des zu vermessenden Raumes, platziert. Der Referenzgegenstand 200, 200a umfasst eine Magnetfelderzeugungsvorrichtung 202 zur Erzeugung zumindest dreier gerichteter Magnetfelder B1, B2, B3 (vgl. Figur 3, Verfahrensschritt 16 sowie Figur 4, Bezugszeichen 210) mit unterscheidbaren Modulationsfrequenzen f1, f2, f3. Die Magnetfelderzeugungsvorrichtung 202 umfasst drei Emitterspulen Tx1, Tx2, Tx3 mit Bezugszeichen 204a, 204b, 204c, die wechselweise orthogonal zueinander ausgerichtet sind. Der erste Gegenstand 100, 100a weist eine Magnetfelderfassungsvorrichtung 112 zum Erfassen von Magnetfeldstärken |Bx(P)|, |By(P)|, |Bz(P)| und Modulationsfrequenzen f1, f2, f3 der drei Magnetfelder B1, B2, B3 auf. Die Magnetfelderfassungsvorrichtung 112 umfasst drei Magnetfeldsensoren 114a, 114b, 114c, die hier als Hall-Sensoren ausgebildet, die jeweils orthogonal zueindander ausgerichtete Sensitivität aufweisen. Ferner weist das System 300, 300a, hier der erste Gegenstand 100, 100a, eine Auswertevorrichtung 302 auf, die zur Ermittlung der relativen Position P des ersten Gegenstands 100, 100a bezüglich des Referenzgegenstands 200, 200a den Verfahrensschritt des Ermittelns der relativen Position P (vgl. Figur 3, Verfahrensschritt 24) ausführt. Abhängig von der ermittelten relativen Position P wird eine Funktion des Laserentfernungsmessers gesteuert, beispielsweise die Durchführung und/oder Zuordnung einer Entfernungsmessung.

Das in Figur 2 dargestellte System 300, 300b zeigt in perspektivischer Darstellung einen ersten Gegenstand 100, 100b, der als ein Roboter, hier ein autonomer Rasenmäher oder ein autonomer Staubsauger, realisiert ist. Der autonome Rasenmäher weist ein Gehäuse 102 auf. Derartige autonome Rasenmäher sind aus dem Stand der Technik bekannt. Die Position des ersten Gegenstands 100, 100a im dreidimensionalen Raum - hier ebenfalls durch den bidirektionalen Pfeil angedeutet, der eine freie Beweglichkeit des autonomen Rasenmähers darstellt - wird nach erfindungsgemäßem Verfahren 10 als relative Position P bezüglich zumindest eines Referenzgegenstands 200, 200b ermittelt. Der Referenzgegenstand 200, 200b ist dabei als Docking-Station (Basisstation) des autonomen Rasenmähers realisiert und ortsfest auf dem Fußboden des zu bearbeitenden Arbeitsgebiets platziert. Der Referenzgegenstand 200, 200b umfasst eine Magnetfelderzeugungsvorrichtung 202 zur Erzeugung zumindest dreier gerichteter Magnetfelder B1, B2, B3 (vgl. Figur 3, Verfahrensschritt 16 sowie Figur 4, Bezugszeichen 210) mit unterscheidbaren Modulationsfrequenzen f1, f2, f3. Die Magnetfelderzeugung mit unterscheidbaren Modulationsfrequenzen f1, f2, f3. Die Magnetfelderzeugungsvorrichtung 202 umfasst dazu drei Emitterspulen Tx1, Tx2, Tx3 (Bezugszeichen 204a, 204b, 204c), die wechselweise orthogonal zueinander ausgerichtet sind. Der erste Gegenstand 100, 100b weist drei Magnetfelderfassungsvorrichtungen 112a, 112b, 112c auf. Jede der drei Magnetfelderfassungsvorrichtungen i - Bezugszeichen 112a, 112b, 112c - ist zum Erfassen von Magnetfeldstärken |Bxᵢ(P)|, |Byᵢ(P)|, |Bzᵢ(P)| und Modulationsfrequenzen f1, f2, f3 der drei Magnetfelder B1, B2, B3 eingerichtet und umfasst dafür jeweils drei hier nicht näher dargestellte Empfängerspulen, die als RF-Spulen realisiert sind. Die drei Magnetfelderfassungsvorrichtungen 112a, 112b, 112c, insbesondere die darin enthaltenen Empfängerspulen, weisen jeweils eine definierte Anordnung zueinander auf. Hier sind jeweils drei Empfängerspulen paarweise parallel ausgerichtet, wobei die drei Dreierpaare jeweils wiederum orthogonal zueinander ausgerichtet sind. Der Roboter wird, sofern er sich in unmittelbarer Nähe zur Docking-Station befindet, mittels zumindest einer Emitterspule (hier beispielsweise 204b) der Magnetfelderzeugungsvorrichtung 202 geladen, indem induktiv Energie von der Emitterspule an zumindest eine Empfängerspule übermittelt wird und dadurch ein Energiespeicher des Roboters induktiv geladen wird. Ferner weist der erste Gegenstand 100, 100b noch eine drahtlose Kommunikationsvorrichtung 116 auf, die der Kommunikation des ersten Gegenstand 100, 100b mit der Auswertevorrichtung 302 dient. In diesem System 300, 300b ist die Auswertevorrichtung 302 in einer separaten Einheit, beispielsweise in einer Cloud, realisiert, die zur Ermittlung der relativen Position P des ersten Gegenstands 100, 100b bezüglich des Referenzgegenstands 200, 200b zumindest den Verfahrensschritt des Ermittelns der relativen Position P (vgl. Figur 3, Verfahrensschritt 24) ausführt. Die Auswertevorrichtung 302 ist ebenfalls zur drahtlosen Kommunikation (vgl. Funk-Symbol an Kasten) mit dem ersten Gegenstand 100, 100b und dem Referenzgegenstand 200, 200b eingerichtet. Ferner weist der erste Gegenstand 100, 100b einen Odometriesensor 120a als weitere interne Sensorvorrichtung 120 auf, der eine Bewegung der Räder 118 erfasst und daraus weitere Positionsdaten zur Steigerung der Präzision ermittelt (vgl. Figur 3, Verfahrensschritt 24a). Der Odometriesensor 120a dient ferner als rotationssensitive Sensorvorrichtung 122, mittels der eine Bewegungsrichtungsänderung, insbesondere eine Bewegungsrichtungsumkehr um 180°, des ersten Gegenstands 100, 100b erfassbar ist. Auch der Referenzgegenstand 200, 200b weist einen als GPS-Sensor ausgebildeten weiteren Positionssensor auf, der hier nicht näher dargestellt ist. Abhängig von der ermittelten relativen Position P wird eine Funktion des Roboters gesteuert, beispielsweise die Navigation des Roboters oder die Bearbeitung des zu bearbeitenden Arbeitsgebiets.

Figur 3 zeigt ein Ausführungsbeispiel des erfindungsgemäßen Verfahrens 10. Das Verfahren 10 wird verwendet, um eine relative Position P eines ersten Gegenstands 100, 100a, 100b - beispielsweise des in Figur 1 dargestellten Laserentfernungsmessers oder des in Figur 2 dargestellten Roboters - bezüglich zumindest eines Referenzgegenstands 200, 200a, 200b zu ermitteln.

In einem ersten optionalen Verfahrensschritt 12 wird zunächst das Vorhandensein zumindest eines Magnetfelds BSQ einer externen Strahlungsquelle, insbesondere einer nicht dem Referenzgegenstand 200, 200a, 200b zugeordneten Magnetfelderzeugungsvorrichtung 202, detektiert. Dabei wird das Vorhandensein mittels der Magnetfelderfassungsvorrichtung 202 des ersten Gegenstands 100, 100a, 100b und/oder mittels der dem Referenzgegenstand 200, 200a, 200b zugeordneten Magnetfelderzeugungsvorrichtung 202 detektiert. Die Detektion umfasst dabei die Ermittlung einer Modulationsfrequenz fSQ des Magnetfelds BSQ und die Detektion von Pausenzeiten in der Erzeugung TSQ des Magnetfelds BSQ. In Abhängigkeit dieser ermittelten Modulationsfrequenz(en) fSQ und Pausenzeiten in der Erzeugung TSQ des Magnetfelds BSQ werden sowohl die Modulationsfrequenzen f1, f2, f3 als auch Pausenzeiten in der Erzeugung T1, T2, T3 der Magnetfelder B1, B2, B3 angepasst. Dabei werden die Pausenzeiten in der Erzeugung T1, T2, T3 der Magnetfelder B1, B2, B3 derart gewählt, dass die Erzeugung der Magnetfelder B1, B2, B3 in den Pausenzeiten in der Erzeugung TSQ des Magnetfelds BSQ erfolgt. Ferner werden die Frequenzen f1, f2, f3 derart gewählt, dass sie unterschiedlich von der Modulationsfrequenz fSQ sind.

Ferner wird im ersten optionalen Verfahrensschritt 12 ein Einfluss eines Störfelds am ersten Gegenstand 100, 100a, 100b erfasst (der später im Verfahrensschritt 16 zur Kompensation des Störfelds genutzt werden kann).

In einem weiteren optionalen Verfahrensschritt 14 werden die (ggf. in Verfahrensschritt 12 gewählten bzw. modifizierten) Modulationsfrequenzen f1, f2, f3 von der Magnetfelderzeugungsvorrichtung 202 des Referenzgegenstands 200, 200a, 200b zur Magnetfelderfassungsvorrichtung 112 des ersten Gegenstands 100, 100a, 100b mittels der drahtlosen Kommunikationsverbindung (hier realisiert als Funkverbindung) übermittelt und als Referenzsignal eines Lock-in-Verstärkers (hier nicht näher dargestellt) der Magnetfelderfassungsvorrichtung 112 verwendet, sodass in Verfahrensschritt 20 eine signifikante Verbesserung eines Signal-Rausch-Verhältnisses beim Ermitteln der Magnetfeldstärken |Bx(P)|, |By(P)|, |Bz(P)| und folglich der relativen Position P realisierbar ist.

In Verfahrensschritt 16 werden sodann drei gerichtete Magnetfelder B1, B2, B3 (vgl. Figur 4, Bezugszeichen 210) mit den (ggf. zuvor modifizierten) unterscheidbaren Modulationsfrequenzen f1, f2, f3 unter Verwendung der Magnetfelderzeugungsvorrichtung 202 des Referenzgegenstand 200, 200a, 200b erzeugt und ausgesendet.

Im optionalen Verfahrensschritt 18 wird der zuvor im optionalen Verfahrensschritt 12 ermittelte Einfluss des Störfelds genutzt, um diesen durch Steuern und/oder Regeln eines mittels zumindest einer (nicht näher dargestellten) Kompensationsspule emittierten elektromagnetischen Überlagerungsfelds zu kompensieren. Insbesondere wird die Emission des Überlagerungsfelds während des Erfassens der Magnetfeldstärken |Bx(P)|, |By(P)|, |Bz(P)| in Verfahrensschritt 20 aufrechterhalten.

In Verfahrensschritt 20 werden mittels der Magnetfelderfassungsvorrichtung 112, 112a des ersten Gegenstands 100, 100a, 100b Magnetfeldstärken |Bx(P)|, |By(P)|, |Bz(P)| und Modulationsfrequenzen f1, f2, f3 der Magnetfelder B1, B2, B3 an dem Punkt im Raum erfasst, an dem sich der erste Gegenstand 100, 100a, 100b zu diesem Zeitpunkt befindet.

Im optionalen Verfahrensschritt 22 können ferner mittels zumindest einer weiteren Magnetfelderfassungsvorrichtung i 112, 112b, 112c des ersten Gegenstands 100, 100b, Magnetfeldstärken |Bx_{2,3}(P)|, |By_{2,3}(P)|, |Bz_{2,3}(P)| und Modulationsfrequenzen f1, f2, f3 der Magnetfelder B1, B2, B3 erfasst werden, die später im optionalen Unterverfahrensschritt 24b zur Auswertung genutzt werden können.

In Verfahrensschritt 24 wird die relative Position P des ersten Gegenstands 100, 100a, 100b bezüglich des zumindest einen Referenzgegenstands 200, 200a, 200b mittels der Auswertevorrichtung 302 des Systems 300, 300a, 300b aus den erfassten, über die erfassten Modulationsfrequenzen f1, f2, f3 den gerichteten Magnetfeldern B1, B2, B3 zuordenbaren Magnetfeldstärken |Bx(P)|, |By(P)|, |Bz(P)|, ermittelt. Dies kann einerseits durch mathematische Berechnung erfolgen, andererseits durch Vergleich der erfassten Magnetfeldstärken |Bx(P)|, |By(P)|, |Bz(P)| mit einer Magnetfeldkarte. In diesem Ausführungsbeispiel wird zur Erhöhung der Präzision eine Kombination aus beiden Varianten genutzt. In der Magnetfeldkarte sind für den gesamten (möglichen) Bewegungsbereich des ersten Gegenstands 100, 100a, 100b die zu erwartenden Magnetfeldstärken |Bx(P)|, |By(P)|, |Bz(P)| hinterlegt. Diese Magnetfeldkarte kann beispielsweise initial erstellt worden sein und kontinuierlich aktualisiert werden (vgl. Unterverfahrensschritt 24c), um insbesondere Einflüsse von temporären Störfeldern berücksichtigen zu können. Die Ermittlung der relativen Position in Verfahrensschritt 24 umfasst ebenfalls die Übersendung der erforderlichen Messdaten an die Auswertevorrichtung 302.

Im optionalen Unterverfahrensschritt 24a werden beim Ermitteln der relativen Position P weitere Positionsdaten, wie sie beispielsweise mit der internen Sensorvorrichtung 120 in Form des Odometriesensors 120a erfasst werden (vgl. Figur 2), zur Steigerung der Präzision einbezogen, indem diese weiteren Positionsdaten zu einem Abgleich der nach erfindungsgemäßem Verfahren erhaltenen relativen Positionen genutzt werden. Dabei kann beispielsweise ein Verfahren zum Erkennen von Ausreißern angewandt werden, wie es aus DE 102017213577.8 A1 bekannt ist. Ferner weist im Ausführungsbeispiel der Figur 2 der Referenzgegenstand 200, 200b in Form der Dockingstation einen GPS-Sensor auf, mittels dem die ermittelte relative Position des ersten Gegenstands 100, 100b in eine absolute Position umgerechnet werden kann.

Im optionalen Unterverfahrensschritt 24b wird mittels der Auswertevorrichtung 302 eine Relation der Magnetfeldstärken in Form eines Magnetfeldgradientens als komponentenweise Differenz |Bxᵢ(P)| - |Bx(P)|, |Byᵢ(P)| - |By(P)| bzw. |Bzᵢ(P)| - |Bz(P)| ermittelt, wobei i = 2,3 die Werte der weiteren Magnetfelderfassungsvorrichtung 112, 112b, 112c kennzeichnet. Dabei werden jeweils diejenigen Werte subtrahiert, die von parallel ausgerichteten Empfängerspulen bereitgestellt werden. Dabei wird anhand eines Vorzeichens der Relation eine eindeutige Identifikation der relativen Position P zu einem Quadranten des Magnetfelds durchgeführt. Gleichzeitig wird mittels der rotationssensitiven Sensorvorrichtung 122 in Form des Odometriesensors 120a eine Bewegungsrichtungsänderung, insbesondere eine Bewegungsrichtungsumkehr um 180°, des ersten Gegenstands 100, 100b erfasst, wobei im Falle einer Bewegungsrichtungsumkehr eine Vorzeichenumkehr der Relation unberücksichtigt bleibt (bzw. das Vorzeichen mit "-1" multipliziert).

Im optionalen Unterverfahrensschritt 24c werden bei einer Bewegung des ersten Gegenstands 100, 100b zur Detektion von Magnetfeldverzerrungen Abweichungen der Relation von gemäß der definierten Anordnung der Magnetfelderfassungsvorrichtung 112, 112a und der zwei weiteren Magnetfelderfassungsvorrichtung 112, 112b, 112c (i=2, 3) erwarteten Soll-Relationen ausgewertet. Diese Abweichungen lassen auf entsprechende Magnetfeldverzerrungen oder Einflüsse von Störfeldern schließen. Sofern detektiert, werden diese Magnetfeldverzerrungen in der Magnetfeldkarte gespeichert, indem diese aktualisiert oder die bereits enthaltenen Werte mit den neuen fusioniert werden.

Im optionalen Unterverfahrensschritt 24d werden abschließend in jeder Modulationsfrequenz f1, f2, f3 der Magnetfelder B1, B2, B3 und/oder in der Gesamtheit der Modulationsfrequenzen f1, f2, f3 gemeinsam codierte Systeminformationen von der Auswertevorrichtung 302 decodiert.

In Verfahrensschritt 26 werden abschließend zumindest die ermittelte relative Position P, optional die daraus berechnete absolute Position sowie optional die decodierte Systeminformation an einem Ausgang der Auswertevorrichtung 302 zur weiteren Nutzung oder Verarbeitung bereitgestellt.

In Figur 4 ist ein exemplarisches Magnetfeld 210 dargestellt, wie es von zwei zueinander orthogonal angeordneten Emitterspulen 204a, 204c einer Magnetfelderzeugungsvorrichtung 202 eines Referenzgegenstands 200, 200a, 200b in einer Ebene erzeugt wird. Das Magnetfeld untergliedert sich in vier Quadranten Q1, Q2, Q3, Q4, in denen jeweils - unter Vernachlässigung von Magnetfeldverzerrungen - symmetrisch gleiche Magnetfeldstärken vorliegen, beispielsweise an den vier exemplarisch eingezeichneten Punkten 206. Um eine eineindeutige Zuordnung der relativen Position P zu einem der Quadranten zu ermöglichen, umfasst der erste Gegenstand 100, 100b - hier der Roboter in Form des autonomen Rasenmähers aus Figur 2 - drei Magnetfelderfassungsvorrichtungen 112a, 112b, 112c, die unter einer definierten Anordnung zueinander angeordnet sind. Hier steht die Verbindungslinien der hinteren zwei Magnetfelderfassungsvorrichtungen 112b, 112c senkrecht zur Verbindungslinien der zwei Magnetfelderfassungsvorrichtungen 112a, 112c, wobei letztere Verbindungslinie parallel bzw. kollinear zur Fahrtrichtung des Roboters ist (dargestellt durch einen Pfeil). Zur Vereinfachung sei angenommen, dass der Magnetfeldbetrag des Magnetfelds beispielhaft für das Magnetfeld B1 (hier beispielsweise von Emitterspule 204a erzeugt) betrachtet wird - wobei alle weiteren Felder ausgeblendet werden. Von diesem Magnetfeld B1 messen alle drei Magnetfelderfassungsvorrichtungen 112a, 112b, 112c die x-, y-, und z-Komponente (bezeichnet mit |Bxᵢ^{B1}(P)|, |Byᵢ^{B1}(P)|, |Bzᵢ^{B1}(P)| und i=1,2,3), aus denen jeweils der Betrag des am jeweiligen Ort der Magnetfelderfassungsvorrichtung 112a, 112b, 112c wirkenden Magnetfelds gebildet wird. Bewegt sich nun der Roboter in Richtung einer Quadrantengrenze 208, so sinkt die erfasste Magnetfeldstärke |Bx(P)| (des Magnetfelds B1) zunächst an der ersten Magnetfelderfassungsvorrichtung 112a, gefolgt von den zwei weiteren Magnetfelderfassungsvorrichtungen 112b, 112c. Es gilt |Bx₂^{B1}(P)| - |Bx^{B1}(P)| > 0, |Bx₃^{B1}(P)| - |Bx^{B1}(P)| > 0, wobei die Indizes 2, 3 für die zwei Magnetfelderfassungsvorrichtungen 112b, 112c stehen (der Index für i=1 wurde weggelassen).

Bewegt sich der Roboter nun über die Quadrantengrenze 208 hinweg, so steigt die erfasste Magnetfeldstärke zunächst an der ersten Magnetfelderfassungsvorrichtung 112a, während die von den zwei weiteren Magnetfelderfassungsvorrichtungen 112b, 112c erfasste Magnetfeldstärke noch sinkt. Ab einem bestimmten Punkt gilt dann |Bx₂^{B1}(P)| - |Bx(P)| < 0, |Bx₃^{B1}(P)| - |Bx(P)| < 0, sodass aus der Umkehr des Vorzeichens der Relationen |Bx₂^{B1}(P)| - |Bx(P)| bzw. |Bx₃^{B1}(P)| - |Bx(P)| auf einen Übergang in einen anderen Quadranten geschlossen werden kann. Ist die Ausgangsposition des ersten Gegenstands 100, 100b bekannt, so kann stets eine eindeutige Zuordnung der relativen Position P trotz Mehrdeutigkeit des Magnetfelds 210 erreicht werden. Mittels des rotationssensitiven Sensors wird ferner eine Bewegungsrichtungsänderung, insbesondere eine Bewegungsrichtungsumkehr um 180°, des Roboters erfasst. Sollte der Roboter in seiner Bewegungsrichtung umkehren, wird die Vorzeichenumkehr der Relationen dadurch berücksichtigt, dass die Relation |Bx₂^{B1}(P)| - |Bx(P)| bzw. |Bx₃^{B1}(P)| - |Bx(P)| mit "-1" multipliziert wird.

Unter Verwendung der drei Magnetfelderfassungsvorrichtung 112a, 112b, 112c lassen sich ferne auch Magnetfeldverzerrungen detektieren. Durch die bekannte Ausrichtung, insbesondere auch die bekannten Abstände, der Magnetfelderfassungsvorrichtung 112a, 112b, 112c kann ein Abgleich der Relation von gemäß der definierten Anordnung der Magnetfelderfassungsvorrichtungen 112a, 112b, 112c erwarteten Soll-Relationen ausgewertet werden. Weichen gemessene und erwartete Werte voneinander ab, so kann auf eine Magnetfeldverzerrung geschlossen werden. Wie beschrieben, können derartige detektierte Magnetfeldverzerrungen in der Magnetfeldkarte gespeichert werden (vgl. Figur 3 optionaler Unterverfahrensschritt 24c).

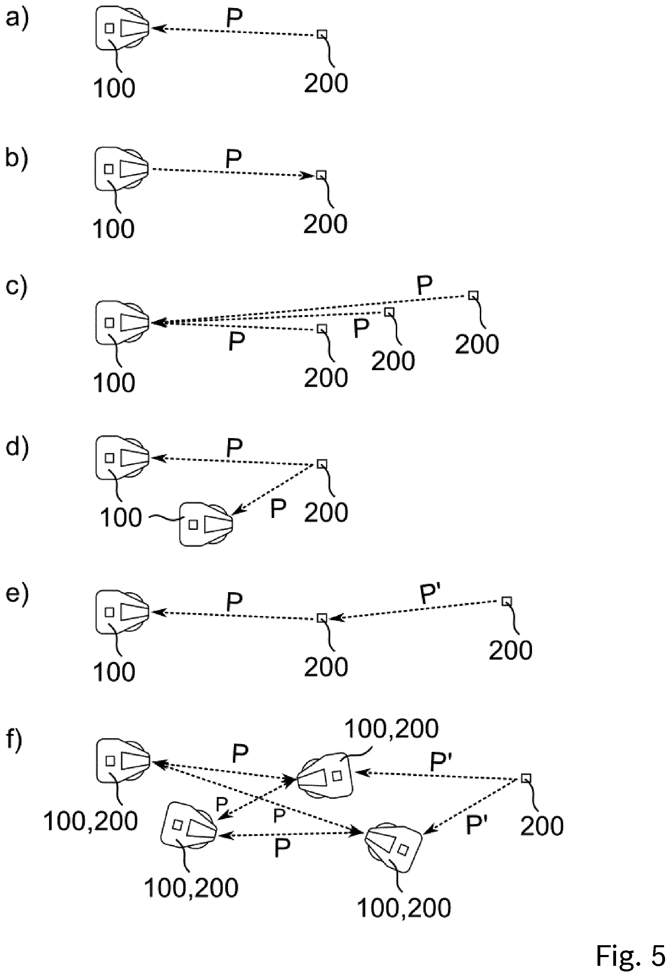

In Figur 5a bis 5f sind unterschiedliche Szenarien dargestellt, wie das erfindungsgemäße Verfahren 10 angewandt werden kann. In Figur 5a wird - in Analogie zu Figuren 1 oder 2 - eine relative Position P eines ersten Gegenstands 100 bezüglich eines Referenzgegenstands 200 ermittelt. Der erste Gegenstand 100 ist dabei frei bewegbar, der Referenzgegenstand 200 stationär. In Figur 5b wird - analog zur Figur 5a - lediglich die relative Relation (der Position P) umgedreht. Hier wird eine relative Position P des Referenzgegenstands 200 bezüglich des ersten Gegenstands 100 ermittelt. Dabei ist der erste Gegenstand 100 stationär, während der Referenzgegenstand 200 frei bewegbar ist. Ferner ist auch möglich, weiterhin den ersten Gegenstand 100 frei bewegbar zu halten, während der Referenzgegenstand 200 stationär ist. In Figur 5c wird die relative Position P des ersten Gegenstands 100, insbesondere wahlweise, bezüglich einer Mehrzahl von Referenzgegenständen 200 ermittelt. Dabei weist jeder Referenzgegenstand 200 eine zugeordnete Magnetfelderzeugungsvorrichtung 202 auf. In Figur 5d wird hingegen eine relative Position P einer Mehrzahl von ersten Gegenständen 100, insbesondere wahlweise, bezüglich zumindest einem Referenzgegenstand 200 ermittelt. In Figur 5e wird eine Aneinanderreihung der Ermittlung relativer Positionen vorgeschlagen. In Analogie zu Figur 5a wird eine relative Position eines ersten Gegenstands 100 bezüglich eines Referenzgegenstands 200 ermittelt. Ferner wird eine relative Position P' des Referenzgegenstands 200 bezüglich zumindest eines weiteren Referenzgegenstands 200 ermittelt. Auch verschachtelte Konstellationen sind denkbar, wie dies in Figur 5f dargestellt ist. Hier werden die relativen Positionen P von zwei ersten Gegenständen 100 bezüglich jeweils zwei weiterer erster Gegenstände 100 ermittelt, wobei alle ersten Gegenstände 100 gleichzeitig auch Referenzgegenstände 200 sind. Dabei werden ferner relative Positionen P' zumindest zweier erster Gegenstände wiederum bezüglich eines weiteren Referenzgegenstands 200c ermittelt. Auf diese Weise kann beispielsweise ein Schwarm von Robotern autonom navigieren, indem jeder Roboter selbst ein Magnetfeld erzeugen als auch empfangen kann. Dadurch wird eine relative Lokalisierung der Roboter zueinander ermöglicht. Diese Lokalisierung kann als Basis für eine gemeinsame Pfadplanung genutzt werden.

Dabei werden in Abhängigkeit zuvor ermittelter Magnetfelder BSQ - die hier durch jeweils die Magnetfelder der übrigen Roboter gegeben sind - die Modulationsfrequenzen f1, f2, f3 und Pausenzeiten in der Erzeugung T1, T2, T3 der Magnetfelder B1, B2, B3 angepasst (vgl. Figur 3, optionaler Verfahrensschritt 12). Insbesondere werden die Modulationsfrequenzen f1, f2, f3 eines jeden Referenzgegenstands 200 derart gewählt, dass sie sich hinreichend von den Modulationsfrequenzen fSQ der übrigen Referenzgegenstände 200 - hier der übrigen Roboter - unterscheiden. Ferner werden die Pausenzeiten in der Erzeugung T1, T2, T3 der Magnetfelder B1, B2, B3 derart gewählt, dass die Erzeugung der Magnetfelder B1, B2, B3 in den jeweiligen Pausenzeiten in der Erzeugung TSQ der Magnetfelder (TSQ = Menge aller anderen Pausenzeiten der übrigen Magnetfelder) der übrigen Referenzgegenstände 200 erfolgt. Derart kann einerseits die Reichweite des Verfahrens zur Ermittlung der relativen Position P des ersten Gegenstands 100 vergrößert werden und andererseits ein Parallelbetrieb von mehreren erfindungsgemäßen Verfahren ermöglicht werden.

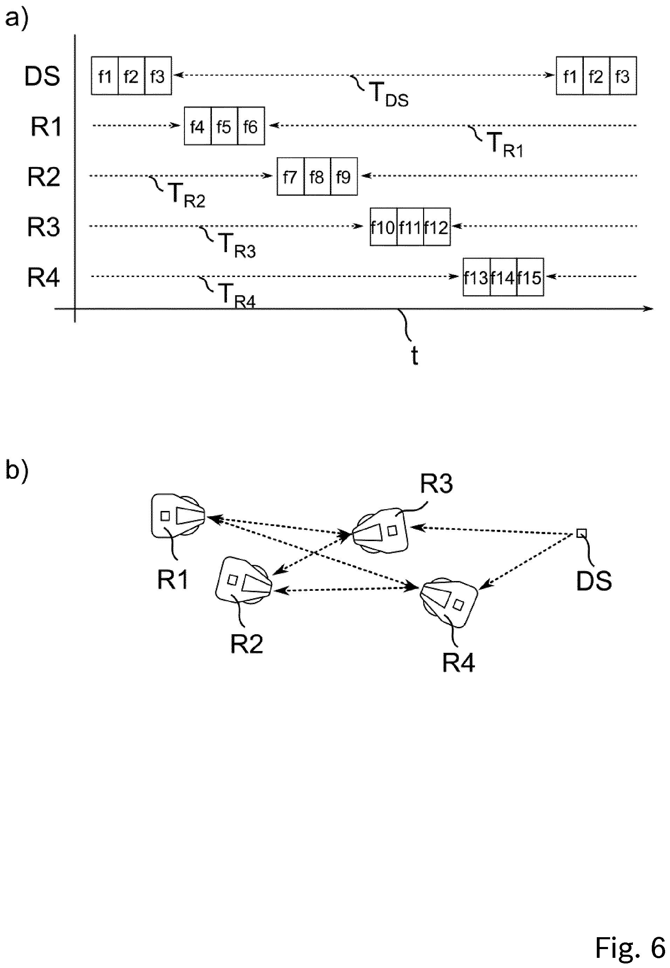

Für die Konstellation der Figur 6b (vergleiche mit Figur 5f) ist in Figur 6a dargestellt, wie die Frequenzen f1 bis f15 und Pausenzeiten in der Erzeugung der Magnetfelder, hier TDS (= Docking-Station), TR1 bis TR4, derart aufeinander angepasst ist, dass keine Frequenzen doppelt vorkommen und dass jeder Referenzgegenstand 200 in jeweils Pausenzeiten der übrigen Referenzgegenstände 200 sendet.

## Patentansprüche

1. Verfahren (10) zur Ermittlung einer relativen Position P eines ersten Gegenstands (100, 100a, 100b) bezüglich zumindest eines Referenzgegenstands (200, 200a, 200b), umfassend:
• Erzeugen zumindest dreier gerichteter Magnetfelder B1, B2, B3 mit unterscheidbaren Modulationsfrequenzen f1, f2, f3 mittels einer dem Referenzgegenstand (200, 200a, 200b) zugeordneten Magnetfelderzeugungsvorrichtung (202), wobei die Magnetfelderzeugungsvorrichtung (202) zumindest drei Emitterspulen Tx1, Tx2, Tx3 umfasst, die wechselweise eine definierte Anordnung zueinander aufweisen,
• Erfassen von Magnetfeldstärken |Bx(P)|, |By(P)|, |Bz(P)| und Modulationsfrequenzen f1, f2, f3 der Magnetfelder B1, B2, B3 mittels einer Magnetfelderfassungsvorrichtung (112, 112a) des ersten Gegenstands (100, 100a, 100b),
• Ermitteln der relativen Position P des ersten Gegenstands (100, 100a, 100b) bezüglich des zumindest einen Referenzgegenstands (200, 200a, 200b) mittels einer Auswertevorrichtung (302) aus den erfassten, über die erfassten Modulationsfrequenzen f1, f2, f3 den gerichteten Magnetfeldern B1, B2, B3 zuordenbaren, Magnetfeldstärken |Bx(P)|, |By(P)|, |Bz(P)|
**dadurch gekennzeichnet, dass**
eine relative Position P' des zumindest einen Referenzgegenstands (200, 200a, 200b) bezüglich zumindest eines weiteren Referenzgegenstands (200, 200a, 200b) ermittelt wird, umfassend:
• Erzeugen zumindest dreier gerichteter Magnetfelder Bx', By', Bz' unterscheidbarer Modulationsfrequenzen f1', f2', f3' mittels einer dem weiteren Referenzgegenstand (200, 200a, 200b) zugeordneten weiteren Magnetfelderzeugungsvorrichtung (202), wobei die weitere Magnetfelderzeugungsvorrichtung (202) zumindest drei Emitterspulen Tx1', Tx2', Tx3' umfasst, die wechselweise eine definierte Anordnung zueinander aufweisen,
• Erfassen von Magnetfeldstärken |Bx'(P')|, |By'(P')|, |Bz'(P')| und Modulationsfrequenzen f1', f2', f3' der Magnetfelder Bx', By', Bz' mittels einer Magnetfelderfassungsvorrichtung (112, 112a) des Referenzgegenstands (200, 200a, 200b),
• Ermitteln der relativen Position P' des Referenzgegenstands (200, 200a, 200b) bezüglich des zumindest einen weiteren Referenzgegenstands (200, 200a, 200b) mittels einer Auswertevorrichtung (302) aus den erfassten, über die erfassten Modulationsfrequenzen f1', f2', f3' den gerichteten Magnetfeldern Bx', By', Bz' zuordenbaren Magnetfeldstärken |Bx'(P')], |By'(P')|, |Bz'(P')|.

2. Verfahren (10) nach Anspruch 1, wobei in einem weiteren Verfahrensschritt die Modulationsfrequenzen f1, f2, f3 von der Magnetfelderzeugungsvorrichtung (202) zur Magnetfelderfassungsvorrichtung (112, 112a) und/oder zur Auswertevorrichtung (302) übermittelt werden, wobei die übermittelten Modulationsfrequenzen f1, f2, f3 zur Verbesserung eines Signal-Rausch-Verhältnisses beim Ermitteln der relativen Position P verwendet werden.

3. Verfahren (10) nach Anspruch 2, wobei die übermittelten Modulationsfrequenzen als Referenzsignal eines Lock-in-Verstärkers der Magnetfelderfassungsvorrichtung (112, 112a) und/oder der Auswertevorrichtung (302) verwendet werden.

4. Verfahren (10) nach einem der vorhergehenden Ansprüche 2-3, wobei die Modulationsfrequenzen f1, f2, f3 mittels einer Funkverbindung übermittelt werden.

5. Verfahren (10) nach einem der vorhergehenden Ansprüche, wobei die relative Position P des ersten Gegenstands (100, 100a, 100b), insbesondere wahlweise, bezüglich einer Mehrzahl von Referenzgegenständen (200, 200a, 200b) ermittelt wird, wobei jeder Referenzgegenstand (200, 200a, 200b) eine zugeordnete Magnetfelderzeugungsvorrichtung (202) umfasst.

6. Verfahren (10) nach einem der vorhergehenden Ansprüche, wobei eine relative Position P einer Mehrzahl von ersten Gegenständen (100, 100a, 100b), insbesondere wahlweise, bezüglich zumindest einem Referenzgegenstand (200, 200a, 200b) ermittelt wird.

7. Verfahren (10) nach einem der vorhergehenden Ansprüche, wobei die Magnetfelderfassungsvorrichtung (112, 112a) zumindest einen Magnetfeldsensor (114a, 114b, 114c) aus einer Liste von Magnetfeldsensoren umfasst, wobei die Liste zumindest Quantensensoren, Hall-Sensoren, farbzentrenbasierte Magnetfeldsensoren und Empfängerspulen, insbesondere RF-Spulen, umfasst.

8. Verfahren (10) nach einem der vorhergehenden Ansprüche, wobei mittels zumindest einer Emitterspule Tx1, Tx2, Tx3 (204a, 204b, 204c) der Magnetfelderzeugungsvorrichtung (202) ein Energiespeicher des ersten Gegenstands (100, 100a, 100b) induktiv geladen wird.

9. Verfahren (10) nach einem der vorhergehenden Ansprüche, wobei jede Modulationsfrequenz f1, f2, f3 der Magnetfelder B1, B2, B3 jeweils eine Systeminformation codiert und/oder wobei alle Modulationsfrequenzen f1, f2, f3 gemeinsam eine Systeminformation codieren.

10. Verfahren (10) nach einem der vorhergehenden Ansprüche, wobei ein Einfluss eines Störfelds erfasst wird und eine erfasste Magnetfeldstärke |Bx(P)|, |By(P)|, |Bz(P)| mittels der Auswertevorrichtung (302) um den Einfluss des Störfelds korrigiert wird und/oder wobei der Einfluss des Störfelds durch Steuern und/oder Regeln eines, mittels zumindest einer Kompensationsspule emittierten, elektromagnetischen Überlagerungsfelds beim Erfassen der Magnetfeldstärken |Bx(P)|, |By(P)|, |Bz(P)| kompensiert wird.

11. Verfahren (10) nach einem der vorhergehenden Ansprüche, wobei beim Ermitteln der relativen Position P weitere Positionsdaten, insbesondere weitere Positionsdaten einer weiteren internen und/oder externen Sensorvorrichtung (120, 120a), zur Steigerung der Präzision und/oder zur Ermittlung einer absoluten Position einbezogen werden.

12. System umfassend einen ersten Gegenstand (100, 100a, 100b), zumindest einen Referenzgegenstand (200, 200a, 200b) sowie eine Auswertevorrichtung (302), **dadurch gekennzeichnet, dass** das System, insbesondere die Auswertevorrichtung (302), dazu eingerichtet ist, ein Verfahren (10) nach einem der vorhergehenden Ansprüche 1 bis 11 auszuführen.

## Claims

1. Method (10) for ascertaining a relative position P of a first object (100, 100a, 100b) with respect to at least one reference object (200, 200a, 200b), comprising:
• generating at least three directed magnetic fields B1, B2, B3 having distinguishable modulation frequencies f1, f2, f3 by means of a magnetic-field-generating device (202) assigned to the reference object (200, 200a, 200b), wherein the magnetic-field-generating device (202) comprises at least three emitter coils Tx1, Tx2, Tx3 which alternately have a defined arrangement to one other,
• measuring magnetic field strengths |Bx(P)|, |By(P)|, |Bz(P)| and modulation frequencies f1, f2, f3 of the magnetic fields B1, B2, B3 by means of a magnetic-field-measuring device (112, 112a) of the first object (100, 100a, 100b),
• ascertaining the relative position P of the first object (100, 100a, 100b) with respect to the at least one reference object (200, 200a, 200b) by means of an evaluation device (302) on the basis of the measured magnetic field strengths |Bx(P)|, |By(P)|, |Bz(P)| which are able to be assigned to the directed magnetic fields B1, B2, B3 via the measured modulation frequencies f1, f2, f3,
**characterized in that**
a relative position P' of the at least one reference object (200, 200a, 200b) with respect to at least one further reference object (200, 200a, 200b) is ascertained, comprising:
• generating at least three directed magnetic fields Bx', By', Bz' of distinguishable modulation frequencies f1', f2', f3' by means of a further magnetic-field-generating device (202) assigned to the further reference object (200, 200a, 200b), wherein the further magnetic-field-generating device (202) comprises at least three emitter coils Tx1', Tx2', Tx3', which alternately have a defined arrangement to one other,
• measuring magnetic field strengths |Bx'(P')|, |By'(P')|, |Bz'(P')| and modulation frequencies f1', f2', f3' of the magnetic fields Bx', By', Bz' by means of a magnetic-field-measuring device (112, 112a) of the reference object (200, 200a, 200b),
• ascertaining the relative position P' of the reference object (200, 200a, 200b) with respect to the at least one further reference object (200, 200a, 200b) by means of an evaluation device (302) on the basis of the measured magnetic field strengths |Bx'(P')|, |By'(P')|, |Bz'(P')| which are able to be assigned to the directed magnetic fields Bx', By', Bz' via the measured modulation frequencies f1', f2', f3'.

2. Method (10) according to Claim 1, wherein, in a further method step, the modulation frequencies f1, f2, f3 are transmitted from the magnetic-field-generating device (202) to the magnetic-field-measuring device (112, 112a) and/or to the evaluation device (302), wherein the transmitted modulation frequencies f1, f2, f3 are used to improve a signal-to-noise ratio when ascertaining the relative position P.

3. Method (10) according to Claim 2, wherein the transmitted modulation frequencies are used as a reference signal of a lock-in amplifier of the magnetic-field-measuring device (112, 112a) and/or of the evaluation device (302).

4. Method (10) according to either of preceding Claims 2 and 3, wherein the modulation frequencies f1, f2, f3 are transmitted by means of a radio connection.

5. Method (10) according to one of the preceding claims, wherein the relative position P of the first object (100, 100a, 100b) with respect to a plurality of reference objects (200, 200a, 200b) is ascertained, in particular optionally, wherein each reference object (200, 200a, 200b) comprises an assigned magnetic-field-generating device (202).

6. Method (10) according to one of the preceding claims, wherein a relative position P of a plurality of first objects (100, 100a, 100b) with respect to at least one reference object (200, 200a, 200b) is ascertained, in particular optionally.

7. Method (10) according to one of the preceding claims, wherein the magnetic-field-measuring device (112, 112a) comprises at least one magnetic-field sensor (114a, 114b, 114c) from a list of magnetic-field sensors, wherein the list comprises at least quantum sensors, Hall sensors, colour-centre-based magnetic-field sensors and receiver coils, in particular RF coils.

8. Method (10) according to one of the preceding claims, wherein an energy store of the first object (100, 100a, 100b) is inductively charged by means of at least one emitter coil Tx1, Tx2, Tx3 (204a, 204b, 204c) of the magnetic-field-generating device (202).

9. Method (10) according to one of the preceding claims, wherein each modulation frequency f1, f2, f3 of the magnetic fields B1, B2, B3 in each case codes system information and/or wherein all the modulation frequencies f1, f2, f3 together code system information.

10. Method (10) according to one of the preceding claims, wherein an influence of an interference field is measured and a measured magnetic field strength |Bx(P)|, |By(P)|, |Bz(P)| is corrected for the influence of the interference field by means of the evaluation device (302) and/or wherein the influence of the interference field is compensated for when measuring the magnetic field strengths |Bx(P)|, |By(P)|, |Bz(P)| by controlling and/or regulating an electromagnetic superposition field emitted by means of at least one compensation coil.

11. Method (10) according to one of the preceding claims, wherein, when ascertaining the relative position P, further position data, in particular further position data of a further internal and/or external sensor device (120, 120a), are included for increasing the precision and/or for ascertaining an absolute position.

12. System comprising a first object (100, 100a, 100b), at least one reference object (200, 200a, 200b) and an evaluation device (302), **characterized in that** the system, in particular the evaluation device (302), is configured to carry out a method (10) according to one of preceding Claims 1 to 11.

## Revendications

1. Procédé (10) permettant de déterminer une position relative P d'un premier objet (100, 100a, 100b) par rapport à au moins un objet de référence (200, 200a, 200b), comprenant les étapes consistant à :
• générer au moins trois champs magnétiques directionnels B1, B2, B3 ayant des fréquences de modulation distinctes f1, f2, f3 au moyen d'un dispositif de génération de champ magnétique (202) associé à l'objet de référence (200, 200a, 200b), le dispositif de génération de champ magnétique (202) comprenant au moins trois bobines émettrices Tx1, Tx2, Tx3 qui présentent en alternance un agencement défini les unes par rapport aux autres,
• détecter des intensités de champ magnétique |Bx(P)|, |By(P)|, |Bz(P)| et des fréquences de modulation f1, f2, f3 des champs magnétiques B1, B2, B3 au moyen d'un dispositif de détection de champ magnétique (112, 112a) du premier objet (100, 100a, 100b),
• déterminer la position relative P du premier objet (100, 100a, 100b) par rapport audit au moins un objet de référence (200, 200a, 200b) au moyen d'un dispositif d'évaluation (302) à partir des intensités de champ magnétique |Bx(P)|, |By(P)|, |Bz(P)| détectées, pouvant être associées aux champs magnétiques directionnels B1, B2, B3 par l'intermédiaire des fréquences de modulation f1, f2, f3,
**caractérisé en ce**
**qu'**une position relative P' dudit au moins un objet de référence (200, 200a, 200b) par rapport à au moins un objet de référence supplémentaire (200, 200a, 200b) est déterminée, comprenant les étapes consistant à :
• générer au moins trois champs magnétiques directionnels Bx', By', Bz' ayant des fréquences de modulation distinctes f1', f2', f3' au moyen d'un dispositif de génération de champ magnétique supplémentaire (202) associé à l'objet de référence supplémentaire (200, 200a, 200b), le dispositif de génération de champ magnétique supplémentaire (202) comprenant au moins trois bobines émettrices Tx1', Tx2', Tx3' qui présentent en alternance un agencement défini les unes par rapport aux autres,
• détecter des intensités de champ magnétique |Bx'(P')|, |By'(P')|, |Bz'(P')| et des fréquences de modulation f1', f2', f3' des champs magnétiques Bx', By', Bz' au moyen d'un dispositif de détection de champ magnétique (112, 112a) du premier objet (200, 200a, 200b),
• déterminer la position relative P' de l'objet de référence (200, 200a, 200b) par rapport audit au moins un objet de référence supplémentaire (200, 200a, 200b) au moyen d'un dispositif d'évaluation (302) à partir des intensités de champ magnétique |Bx'(P')|, |By'(P')|, |Bz'(P')| détectées, pouvant être associées aux champs magnétiques directionnels Bx', By', Bz' par l'intermédiaire des fréquences de modulation f1', f2', f3' détectées.

2. Procédé (10) selon la revendication 1, dans lequel, dans une étape de procédé supplémentaire, les fréquences de modulation f1, f2, f3 sont transmises par le dispositif de génération de champ magnétique (202) au dispositif de détection de champ magnétique (112, 112a) et/ou au dispositif d'évaluation (302), les fréquences de modulation f1, f2, f3 étant utilisées pour améliorer un rapport signal/bruit lors de la détermination de la position relative P.

3. Procédé (10) selon la revendication 2, dans lequel les fréquences de modulation transmises sont utilisées comme un signal de référence d'un amplificateur de blocage du dispositif de détection de champ magnétique (112, 112a) et/ou du dispositif d'évaluation (302).

4. Procédé (10) selon l'une quelconque des revendications précédentes 2 à 3, dans lequel les fréquences de modulation f1, f2, f3 sont transmises au moyen d'une liaison radio.

5. Procédé (10) selon l'une quelconque des revendications précédentes, dans lequel la position relative P du premier objet (100, 100a, 100b) est déterminée, en particulier sélectivement, par rapport à une pluralité d'objets de référence (200, 200a, 200b), chaque objet de référence (200, 200a, 200b) comprenant un dispositif de génération de champ magnétique associé (202).

6. Procédé (10) selon l'une quelconque des revendications précédentes, dans lequel une position relative P d'une pluralité de premiers objets (100, 100a, 100b) est déterminée, en particulier sélectivement, par rapport à au moins un objet de référence (200, 200a, 200b).

7. Procédé (10) selon l'une quelconque des revendications précédentes, dans lequel le dispositif de détection de champ magnétique (112, 112a) comprend au moins un capteur de champ magnétique (114a, 114b, 114c) d'une liste de capteurs de champ magnétique, dans lequel la liste comprend au moins des capteurs quantiques, des capteurs à effet Hall, des capteurs de champ magnétique à base de centres de couleur et des bobines réceptrices, en particulier des bobines RF.

8. Procédé (10) selon l'une quelconque des revendications précédentes, dans lequel au moins une bobine émettrice Tx1, Tx2, Tx3 (204a, 204b, 204c) du dispositif de génération de champ magnétique (202) permet de charger par induction un accumulateur d'énergie du premier objet (100, 100a, 100b).

9. Procédé (10) selon l'une quelconque des revendications précédentes, dans lequel chaque fréquence de modulation f1, f2, f3 des champs magnétiques B1, B2, B3 code respectivement une information système, et/ou dans lequel toutes les fréquences de modulation f1, f2, f3 codent ensemble une information système.

10. Procédé (10) selon l'une quelconque des revendications précédentes, dans lequel une influence d'un champ parasite est détectée, et une intensité de champ magnétique |Bx(P)|, |By(P)|, |Bz(P)| détectée est corrigée de l'influence du champ parasite au moyen du dispositif d'évaluation (302), et/ou dans lequel l'influence du champ parasite est compensée lors de la détection des intensités de champ magnétique |Bx(P)|, |By(P)|, |Bz(P)| au moyen d'au moins une bobine de compensation par la commande et/ou le réglage d'un champ de superposition électromagnétique émis.

11. Procédé (10) selon l'une quelconque des revendications précédentes, dans lequel lors de la détermination de la position relative P, des données de position supplémentaires, en particulier des données de position supplémentaires d'un dispositif de capteur (120, 120a) supplémentaire interne et/ou externe, sont prises en compte pour augmenter la précision et/ou pour déterminer une position absolue.

12. Système comprenant un premier objet (100, 100a, 100b), au moins un objet de référence (200, 200a, 200b) ainsi qu'un dispositif d'évaluation (302), **caractérisé en ce que** le système, en particulier le dispositif d'évaluation (302), est conçu pour exécuter un procédé (10) selon l'une quelconque des revendications précédentes 1 à 11.
